(19) Europäisches Patentamt / European Patent Office / Office européen des brevets

(11) **EP 2 787 691 A1**

(12) **EUROPEAN PATENT APPLICATION**

(43) Date of publication:
08.10.2014 Bulletin 2014/41

(51) Int Cl.:
*H04L 12/58* (2006.01)

(21) Application number: 14162306.6

(22) Date of filing: 28.03.2014

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME

(30) Priority: 03.04.2013 JP 2013077856

(71) Applicant: FUJITSU LIMITED
Kawasaki-shi,
Kanagawa 211-8588 (JP)

(72) Inventors:
• Kaneda, Tomoaki
Kawasaki-shi, Kanagawa 211-8588 (JP)
• Yoshida, Hideaki
Kawasaki-shi, Kanagawa 211-8588 (JP)
• Kawashima, Takafumi
Kawasaki-shi, Kanagawa 211-8588 (JP)
• Yoshida, Yukimasa
Kawasaki-shi, Kanagawa 211-8588 (JP)

(74) Representative: Ward, James Norman
Haseltine Lake LLP
Lincoln House, 5th Floor
300 High Holborn
London WC1V 7JH (GB)

(54) **Communication system and electronic mail delivery control method in a communication system**

(57) A communication system includes: a terminal apparatus; and a delivery control apparatus configured to deliver automatically electronic mail to the terminal apparatus without waiting for an acquisition request for the electronic mail from the terminal apparatus, when the delivery control apparatus is configured to receive the electronic mail, wherein the delivery control apparatus includes a mail delivery management unit configured to control to suspend or resume automatic delivery of the electronic mail according to a state of a delivery route of the electronic mail or an apparatus located on the delivery route from the delivery control apparatus to the terminal apparatus, and the terminal apparatus includes a reception unit configured to receive the automatically delivered electronic mail.

FIG. 2

MOBILE COMMUNICATION SYSTEM 10

EP 2 787 691 A1

**Description**

FIELD

The embodiments discussed herein are related to a communication system and an electronic mail delivery control method in a communication system.

BACKGROUND

A mobile communication system such as a mobile telephone system and a wireless LAN (Local Area Network) is widely in use today. Continuous discussion on the next generation communication technique is carried out to further improve communication speed and communication capacity in the field of mobile communication. For example, in the 3GPP (3rd Generation Partnership Project), an association for standardization, the standardization of communication standard such as LTE (Long Term Evolution) and LTE-based LTE-A (LTE-Advance) are completed or under study.

In such a mobile communication system, a variety of services including speech communication, video distribution and Web page browsing are provided for a user (or a terminal apparatus). As one of the services provided by the mobile communication system, there is a delivery service of electronic mail.

An electronic mail in the mobile communication system is, for example, automatically delivered from a mail server to a terminal apparatus in the mobile communication system. Such automatic delivery of electronic mail may be designated as push-type electronic mail (or push delivery), in which the electronic mail is delivered from a mail server to an electronic mail client (for example, terminal apparatus) instantly and actively. Such a mail server is provided by a mobile terminal business corporation.

On the other hand, electronic mail delivery provided by a service provider may be designated as a pull method (or pull delivery), which provides such a mechanism that an electronic mail is stored in a mail server and the stored electronic mail is delivered upon request from an electronic mail client.

Such a difference between electronic mail delivery methods results from the fact that a terminal apparatus in the mobile communication system is continuously connected to a network, whereas a personal computer or the like in a provider network is not always connected to the network.

In the event of a disaster such as an earthquake, a user may perform an emergency contact and safety confirmation using such a mobile communication system. Because such communication is performed simultaneously in the event of a disaster, congestion may occur in each apparatus and a channel in the mobile communication system.

Congestion occurs in the event of not only a disaster but a failure in each apparatus and a channel in the mobile communication system, for example. The occurrence of congestion greatly deteriorates a throughput, which may bring the terminal apparatus into a state difficult or incapable of communication.

To cope with congestion, there is a technique as described below, for example. Namely, when a communication base station apparatus observes an earthquake, there is a technique of radio communication using a lower frequency band, without waiting for control from an upper-level communication network. According to the technique, for example, communication with a larger number of users can be performed by the use of the lower frequency band, and congestion can be avoided if such control is performed before the occurrence of congestion.

As another technique than congestion, there is a technique as follows, for example. Namely, there is an electronic mail transmission apparatus in which an access to a mail server among a plurality of mail servers is made according to a priority pattern that is determined based on attribute information such as user-specified urgency and a transmission data size. According to the above technique, for example, one mail server is selected from among the plurality of mail servers according to a priority determined based on a variety of conditions, so that electronic mail transmission to the mail server becomes possible.

[Prior art documents]

[Patent documents]

[Patent document 1] Japanese Laid-open Patent Publication No.2009-239533
[Patent document 2] Japanese Laid-open Patent Publication No.2006-65454

However, the above-mentioned technique to cope with congestion is congestion control which is performed in the communication base station apparatus, and is not performed to the mail server in the mobile communication system. Therefore, the mail server transmits electronic mail by automatic delivery, if a failure occurs in an apparatus or a channel between the mail server and the terminal apparatus in the mobile communication system. Thus, there is possibility that the electronic mail transmitted from the mail server may be retained in the apparatus or the channel between the mail server and the terminal apparatus.

There may be a case that the electronic mail forced to be retained in the apparatus or the channel is not delivered to the terminal apparatus, a transmission destination of the electronic mail. The retained electronic mail may cause congestion in the mail server, the apparatus, the channel, etc. in the vicinity where the failure occurs. Such congestion may bring about a case in which communication such as an emergency contact and safety confirmation through a telephone call becomes impossible in the event of a disaster, for example.

Also, in regard to the technique in which a mail server is selected from among the plurality of mail servers on the basis of the variety of conditions, it is not aimed to perform congestion control to the mail server in the mobile communication system, and therefore, the retained electronic mail may produce congestion or an overload.

SUMMARY

Accordingly, it is an object in one aspect of the invention to provide a communication system and an electronic mail delivery control method in a communication system, enabling communication by preventing the occurrence of congestion in the event of a failure or a disaster.

According to an aspect of the embodiments, a communication system includes: a terminal apparatus; and a delivery control apparatus configured to deliver automatically electronic mail to the terminal apparatus without waiting for an acquisition request for the electronic mail from the terminal apparatus, when the delivery control apparatus is configured to receive the electronic mail, wherein the delivery control apparatus includes a mail delivery management unit configured to control to suspend or resume automatic delivery of the electronic mail according to a state of a delivery route of the electronic mail or an apparatus located on the delivery route from the delivery control apparatus to the terminal apparatus, and the terminal apparatus includes a reception unit configured to receive the automatically delivered electronic mail.

BRIEF DESCRIPTION OF DRAWINGS

FIG. 1 is a diagram illustrating a configuration example of a mobile communication system.
FIG. 2 is a diagram illustrating a configuration example of a mobile communication system.
FIG. 3 is a diagram illustrating a configuration example of a mobile communication system.
FIG. 4 is a diagram illustrating a configuration example of a mobile communication system.
FIG. 5 is a diagram illustrating a configuration example of a mobile communication system.
FIG. 6 is a diagram illustrating a configuration example of a mobile communication system.
FIG. 7 is a diagram illustrating a configuration example of a mobile communication system.
FIGS. 8A to 8C are a diagram illustrating a configuration example of a mobile communication system.
FIG. 9 is a diagram illustrating a configuration example of a mobile communication system.
FIGS. 10A and 10B are diagrams illustrating the position of a monitoring unit in the mobile communication system.
FIG. 11 is a diagram illustrating a configuration example of a mail server control unit.
FIG. 12 is a diagram illustrating a configuration example of a subordinate node monitoring unit.
FIG. 13 is a diagram illustrating a configuration example of a mail transceiver unit.
FIG. 14 is a flowchart illustrating an operation example of electronic mail delivery control.
FIG. 15A is a diagram illustrating an example of system data, and FIGS. 15B and 15C are diagrams illustrating examples of monitoring information, respectively.
FIG. 16A illustrates monitoring information, FIG. 16B illustrates a monitoring information request and FIG. 16C illustrates a monitoring information response, respectively, as examples of diagrams.
FIG. 17 is a diagram illustrating an example of mail delivery control information.
FIG. 18A is a diagram illustrating an example of a mail delivery method change control report, and FIG. 18B is a diagram illustrating an example of a confirmation result of a mail delivery method change control report, respectively.
FIG. 19A is a diagram for explaining a case of performing division transmission with a restricted delivery size, and FIG. 19B is an example of a route list table.
FIG. 20 is a diagram illustrating a sequence example in the mobile communication system.
FIG. 21 is a diagram illustrating a sequence example in the mobile communication system.
FIG. 22 is a diagram illustrating a sequence example in the mobile communication system.
FIG. 23 is a diagram illustrating a sequence example in the mobile communication system.
FIG. 24 is a diagram illustrating a sequence example in the mobile communication system.

FIG. 25 is a diagram illustrating a sequence example in the mobile communication system.
FIG. 26 is a diagram illustrating a sequence example in the mobile communication system.
FIG. 27 is a diagram illustrating a sequence example in the mobile communication system.
FIG. 28 is a diagram illustrating a sequence example in the mobile communication system.
FIG. 29 is a diagram illustrating a sequence example in the mobile communication system.
FIG. 30 is a diagram illustrating a sequence example in the mobile communication system.
FIG. 31 is a diagram illustrating a sequence example in the mobile communication system.
FIG. 32 is a diagram illustrating a sequence example in the mobile communication system.
FIG. 33 is a diagram illustrating a sequence example in the mobile communication system.
FIG. 34 is a diagram illustrating a sequence example in the mobile communication system.
FIG. 35 is a diagram illustrating a sequence example in the mobile communication system.
FIG. 36 is a diagram illustrating a sequence example in the mobile communication system.
FIG. 37 is a diagram illustrating a sequence example in the mobile communication system.
FIG. 38 is a diagram illustrating a sequence example in the mobile communication system.
FIG. 39 is a diagram illustrating a sequence example in the mobile communication system.
FIG. 40 is a diagram illustrating a sequence example in the mobile communication system.
FIG. 41 is a diagram illustrating a sequence example in the mobile communication system.
FIG. 42 is a diagram illustrating a sequence example in the mobile communication system.
FIG. 43 is a diagram illustrating a configuration example of a mail server control unit.
FIGS. 44A and 44B are diagrams illustrating configuration examples of a subordinate node monitoring unit.
FIG. 45 is a diagram illustrating a configuration example of a mail transceiver unit.

DESCRIPTION OF EMBODIMENTS

Hereafter, the embodiments of the present invention will be described.

[First embodiment]

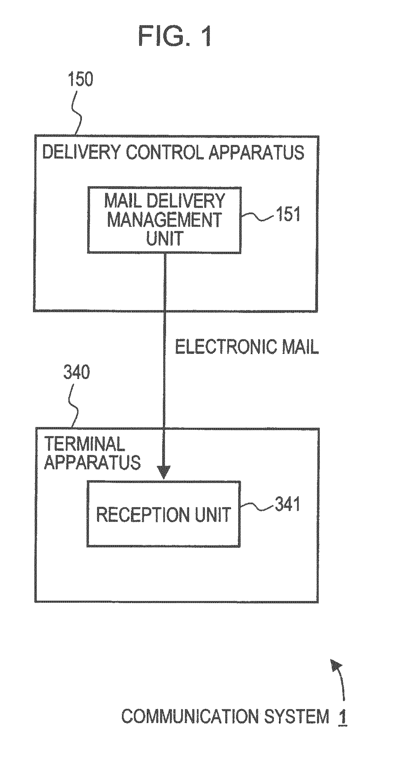

First, a description will be given on a first embodiment. FIG. 1 is a diagram illustrating a configuration example of a communication system 1 according to the first embodiment. The communication system 1 includes a delivery control apparatus 150 and a terminal apparatus 340.
The delivery control apparatus 150, on receiving an electronic mail, automatically delivers the electronic mail to the terminal apparatus 340, without waiting for an acquisition request for electronic mail from the terminal apparatus 340. The delivery control apparatus 150 includes a mail delivery management unit 151.
The mail delivery management unit 151 monitors and controls an electronic mail delivery route, or an apparatus located on the delivery route, from the delivery control apparatus 150 to the terminal apparatus 340, and detects a failure on the electronic mail delivery route or the apparatus located on the delivery route, to suspend or resume automatic delivery of electronic mail.
The terminal apparatus 340 includes a reception unit 341. The reception unit 341 receives a delivery controlled electronic mail from the delivery control apparatus 150.
According to the present first embodiment, the mail delivery management unit 151 monitors and controls the electronic mail delivery route or the apparatus located on the delivery route from the delivery control apparatus 150 to the terminal apparatus 340, to suspend the automatic delivery of electronic mail on detecting a failure on the electronic mail delivery route or the apparatus located on the delivery route. By this, for example, on the occurrence of a failure in the apparatus or on the route from the delivery control apparatus 150 to the terminal apparatus 340, each electronic mail is not delivered automatically from the delivery control apparatus 150, and thus, the occurrence of congestion caused by the electronic mail can be prevented. Accordingly, in the communication system 1, it is possible to perform other communication such as a telephone call in an emergency contact.
Also, according to the first embodiment, the mail delivery management unit 151 monitors and controls the electronic mail delivery route or the apparatus located on the delivery route from the delivery control apparatus 150 to the terminal apparatus 340, to resume the automatic delivery of electronic mail is suspended by the detection of a failure on the electronic mail delivery route or the apparatus located on the delivery route. By this, the present communication system 1 can perform appropriate electronic mail delivery to a user (or terminal apparatus 340), so as to provide user convenience.

[Second embodiment]

Next, a description will be given on a second embodiment. First, the configuration example of a mobile communication system according to the second embodiment will be described.

Here, the mobile communication system is one example of a communication system that delivers an electronic mail, for example. As the communication system, a system other than the mobile communication system is applicable.

Also, in the present second embodiment, the description will be given on both the case of using a communication standard conforming to LTE and the case of using a communication standard of the prior generation to LTE (for example, HSDPA (High Speed Downlink Packet Access), 3G (3rd Generation) etc.) For the sake of easy explanation, the former may be designated as an LTE-based mobile communication system, whereas the latter may be designated as a 3G-based mobile communication system.

<Configuration examples of the mobile communication system>

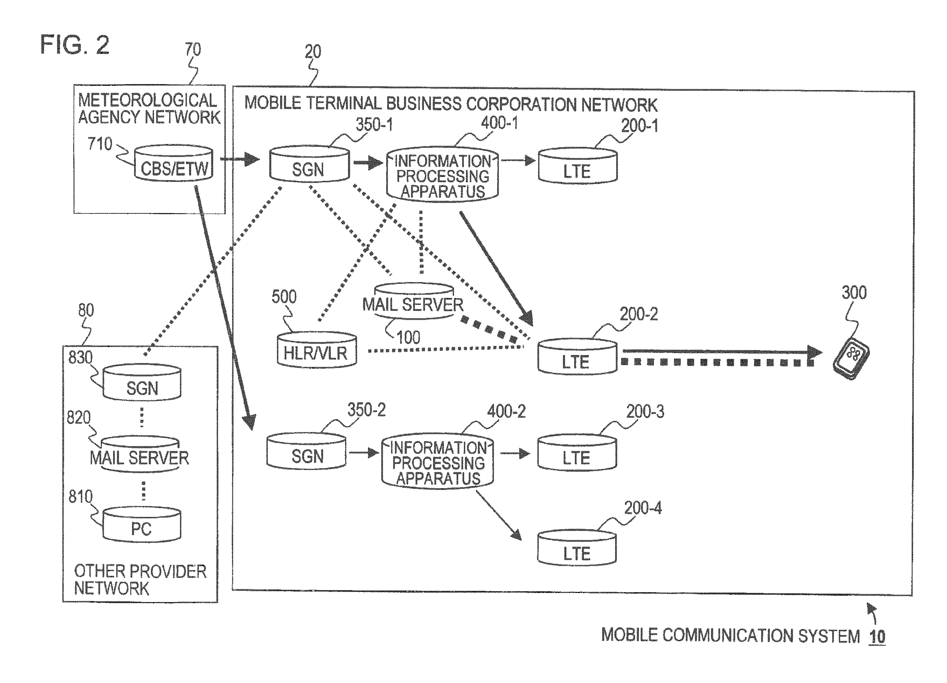

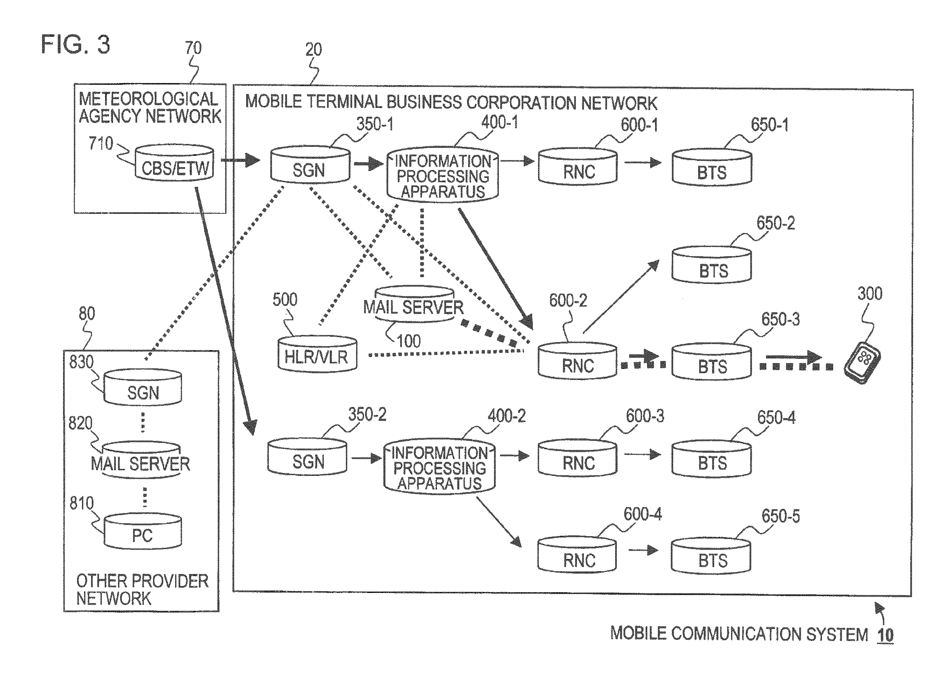

FIGS. 2 and 3 are diagrams illustrating the configuration examples of a mobile communication system 10 according to the second embodiment. FIG. 2 illustrates the configuration example of an LTE-based mobile communication system 10, and FIG. 3 illustrates the configuration example of a 3G-based mobile communication system 10, respectively.

Here, each mobile communication system 10 corresponds to the communication system 1 in the first embodiment.

The LTE-based mobile communication system 10 includes a mobile terminal business corporation network 20, a Meteorological Agency network 70 and another provider network 80.

The mobile terminal business corporation network 20 includes a mail server 100, LTE apparatuses 200-1 to 200-4, a mobile terminal apparatus (or a terminal apparatus, which hereafter may also be referred to as a terminal) 300, SGNs (Serving General packet radio service support Nodes) 350-1, 350-2, information processing apparatuses 400-1, 400-2 and an HLR/VLR (Home Location Register/Visitor Location Register) 500.

Also, the Meteorological Agency network 70 includes a CBS/ETW (Cell Broadcast Service/Earthquake Tsunami Warning) 710.

Further, the other provider network 80 includes a personal computer (hereafter may also be referred to as PC) 810, a mail server 820 and an SGN 830.

The delivery control apparatus 150 in the first embodiment corresponds to the mail server 100, for example. Also, the terminal apparatus 340 in the first embodiment corresponds to the terminal 300, for example.

In the present mobile communication system 10, for example, an electronic mail (which hereafter may be referred to as mail) transmitted from the PC 810 of the other network 80 and destined to the terminal 300 passes from the PC 810 through the mail server 820 and the SGNs 830, 350-1, to arrive at the mail server 100. The mail is then transmitted from the mail server 100 through the LTE apparatus 200-2 to the terminal 300.

Also, an early warning (or emergency information) such as an earthquake early warning is distributed from the CBS/ETW 710 in the Meteorological Agency network 70 to the information processing apparatus 400-1 through the SGN 350-1. Then, the information processing apparatus 400-1 generates an Area Mail (or emergency information) to transmit to the terminal 300 through the LTE apparatus 200-1.

The mail server 100 is, for example, a delivery control apparatus that performs mail delivery, and delivers a mail by automatic delivery. The mail server 100 can suspend mail automatic delivery or resume suspended automatic delivery. The automatic delivery, which may also be designated as, for example, push delivery, signifies a delivery method in which electronic mail is delivered from the mail server 100 to the terminal 300 instantly and actively without waiting for a mail acquisition request. Details of the mail server 100 will be described later.

The LTE apparatuses 200-1 to 200-4 are, for example, radio base station apparatuses to perform radio communication with the terminal 300. In the example illustrated in FIG. 2, the LTE apparatuses 200-1 to 200-4 convert Area Mail etc. transmitted from the information processing apparatus 400-1 into each radio signal conforming to the LTE communication standard, to transmit to the terminal 300. Also, the LTE apparatuses 200-1 to 200-4 collect, for example, congestion information in regard to the own apparatuses, the subordinate terminal 300, etc. to transmit to the mail server 100. Details of the LTE apparatuses 200-1 to 200-4 will be described later.

The terminal 300 is a reception apparatus that receives a mail automatically delivered from the mail server 100, for example. The terminal 300 receives a radio signal transmitted from the LTE apparatus 200-2, for example, and extracts data etc. from the received radio signal, so as to receive the mail. The terminal 300 also monitors a notification transmitted from the network side (for example, the LTE apparatus 200-2 etc.), and controls to set a mail reception state to be an automatic reception state, or controls to suspend the automatic reception state of the mail, etc. Details of the terminal 300 will be described later.

SGNs 350-1, 350-2 are nodes that provide a packet communication service in the mobile terminal business corporation network 20, for example. The SGNs 350-1, 350-2 are connected to the CBS/ETW 710 in the Meteorological Agency network 70, to distribute an early warning to the information processing apparatuses 400-1, 400-2 (which may hereafter be referred to as information processing apparatuses 400). Also, the SGN 350-1 is connected to the SGN 830 in the other provider network, to transmit to the mail server 100 a mail transmitted from the other provider network 80.

The information processing apparatus 400, on receiving through the SGN 350-1 the distributed early warning transmitted from the CBS/ETW 710, generates an Area Mail concerning the early warning, to transmit to the LTE apparatus 200-2. The early warning includes an early earthquake warning, a tsunami warning, etc., for example.

The HLR/VLR 500 is a database which manages subscriber information such as a mobile phone number and a terminal identification number, for example. On receiving from the mail server 100 a notification concerning an inquiry about user information, for example, the HLR/VLR 500 replies the mail server 100 with user (or terminal 300) identification information, position information of the user, etc. (hereafter, the above information may be referred to as user information or information concerning an in-zone user). For example, the HLR/VLR 500 receives from the mail server 100 a destination address in the received electronic mail, and replies with user information corresponding to the destination address. Based on the user information, the mail server 100 can acquire information concerning the transmission destination of the electronic mail (for example, which one of the LTE apparatuses 200-1 to 200-4 or which one of the RNCs (Radio Network Controllers) 600-1 to 600-4 and BTSs (Base Transceiver Stations) 650-1 to 650-5).

The CBS/ETW 710 in the Meteorological Agency network 70, on detecting disaster information etc., transmits an early warning toward the mobile terminal business corporation network 200.

The PC 810 in the other provider network 80 is also a transmission apparatus that transmits mail, for example. The mail server 820 receives a mail transmitted from the PC 810, to transmit to the SGN 830. The SGN 830 transmits the mail received from the mail server 820 toward the mobile terminal business corporation network 20.

In the example of FIG. 2, an example of mail transmission destined from the PC 810 to the terminal 300 is illustrated. However, mail transmission destined from the terminal 300 to the PC 810 is acceptable. In this case, the mail is transmitted using a reverse route to the route illustrated in FIG. 2.

FIG. 3 illustrates a configuration example of the 3G-based mobile communication system 10, which additionally includes the RNCs 600-1 to 600-4 and the BTSs 650-1 to 650-5 to the LTE-based mobile communication system 10.

The RNCs 600-1 to 600-4 control one or a plurality of BTSs 650-1 to 650-5 subordinate thereto, to perform originating and incoming call connection control, call termination control, diversity handover control, etc. In the example of FIG. 3, the RNCs 600-1, 600-3, 600-4 control the subordinate BTSs 650-1, 650-4, 650-5, respectively, and the RNCs 600-2 controls two BTSs 650-2, 650-3.

The BTSs 650-1 to 650-5 are radio base station apparatuses that transmit and receive radio signals between with the terminal 300. In the example of FIG. 3, the BTS 650-3 receives a mail transmitted from the RNC 600-2, and converts the received mail into each radio signal conforming to the communication standards of HSDPA and 3G, to transmit to the terminal 300.

The RNCs 600-1 to 600-4 or the BTSs 650-1 to 650-5 can detect each congestion state in the own apparatus, each subordinate apparatus or each channel between with the subordinate apparatus, and can transmit the detected state to the mail server 100. Details of the RNCs 600-1 to 600-4 or the BTSs 650-1 to 650-5 will be described later.

In the examples of FIGS. 2 and 3, the configuration example of the mobile terminal business corporation network 20 is one example, and the number of apparatuses to be included in the mobile terminal business corporation network 20 may be one or plural, and is not limited to the number of apparatuses depicted in FIGS. 2 and 3.

<Operation examples of the mobile communication system>

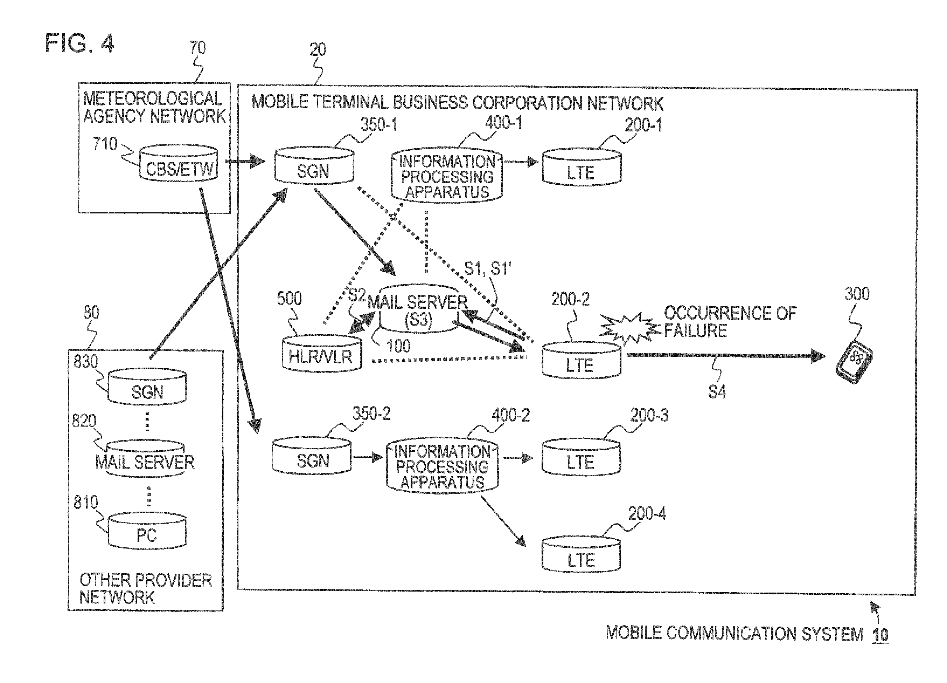

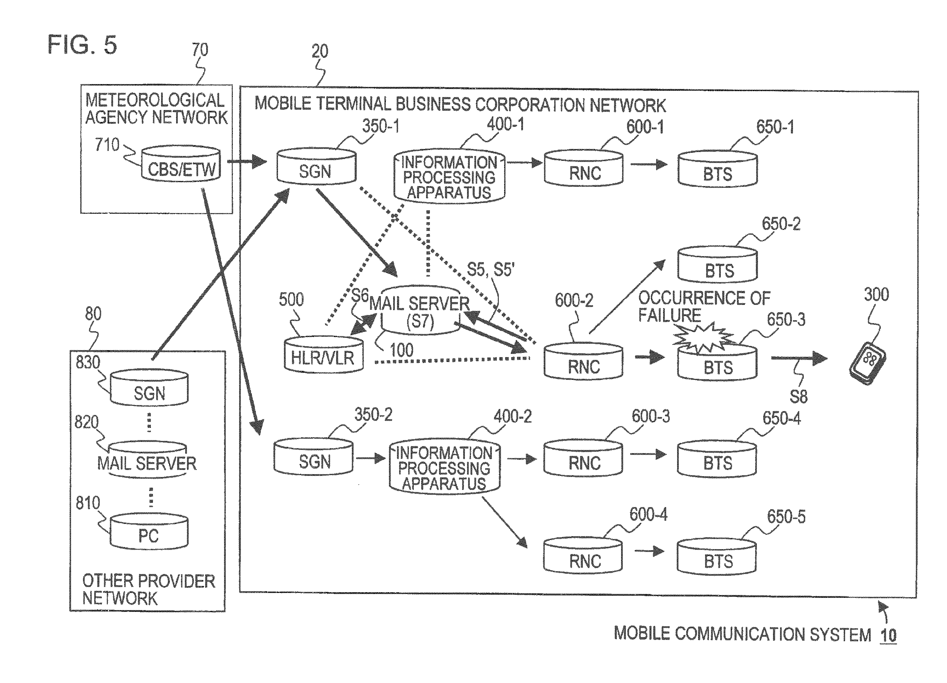

Next, operation examples of mail delivery control in the mobile communication system 10 will be described using FIGS. 4 through 7. Among them, FIG. 4 illustrates an example of mail delivery control when a failure occurs in the LTE-based mobile communication system 10, and FIG. 5 illustrates an example of mail delivery control when a failure occurs in the 3G-based mobile communication system 10, respectively.

In the example of FIG. 4, a mail transmitted from the PC 810 of the other provider network 80 is transmitted to the terminal 300 through the SGN 350-1, the mail server 100 and the LTE 200-2. In such a situation, when a failure occurs in the LTE apparatus 200-2, the LTE apparatus 200-2 transmits monitoring information concerning failure (or alarm) occurrence to the mail server 100 (S1).

On receiving the monitoring information, the mail server 100 makes an inquiry about user information concerning an in-zone user, to acquire the user information from the HLR/VLR 500 (S2).

Next, based on the acquired user information, the mail server 100 suspends automatic delivery of mail to the user, and transmits to the user (or terminal 300) a mail delivery method change control report, including information that mail automatic delivery is suspended (S3).

After mail automatic delivery is suspended, if the mail server 100 receives a mail destined to the user, the mail server 100 retains the mail in an internal memory etc., without transmitting to the user (or terminal 300).

Thereafter, when the failure in the LTE apparatus 200-2 is restored, the LTE apparatus 200-2 transmits monitoring information concerning failure restoration to the mail server 100 (S1').

On receiving the monitoring information, the mail server 100 resumes mail automatic delivery, to transmit the retained mail and a mail that is destined to the user and received after the resumption, to the terminal 300 through the LTE apparatus 200-2 (S4).

In the case of the 3G-based mobile communication system 10, as illustrated in FIG. 5 for example, when a failure occurs in the BTS 650-3, the RNC 600-2 detects the failure and transmits monitoring information concerning failure (or alarm) occurrence to the mail server 100 (S5). In this case, for example, a BTS 650 detects the failure and notifies the RNC 600-2 of that effect, so that the RNC 600-2 can detect the failure of the BTS 650.

Thereafter, similar to the example of the LTE-based mobile communication system 10, the mail server 100 inquires of the HLR/VLR 500 user information concerning an in-zone user (or terminal 300) to acquire the user information (S6). The mail server 100 then suspends mail automatic delivery, and transmits the mail delivery method change control report, including information that mail automatic delivery is suspended, to the user (or terminal 300) (S7).

Thereafter, when the failure in the BTS 650-3 is restored, the RNC 600-2 transmits monitoring information concerning failure restoration to the mail server 100 (S5'). On receiving the monitoring information, the mail server 100 resumes mail automatic delivery (S8).

As such, in the present second embodiment, for example, when a failure occurs on the electronic mail delivery route or the apparatus located on the delivery route, the mail server 100 monitors the state thereof and detects the failure on the electronic mail delivery route or the apparatus located on the delivery route, so as to suspend mail automatic delivery (S3, S7). Therefore, each mail destined to the terminal 300 is not retained in an apparatus or a channel subordinate to the mail server 100, and congestion caused by the mail does not occur. Thus, congestion can be prevented if a failure occurs, and other communication such as speech communication can be performed.

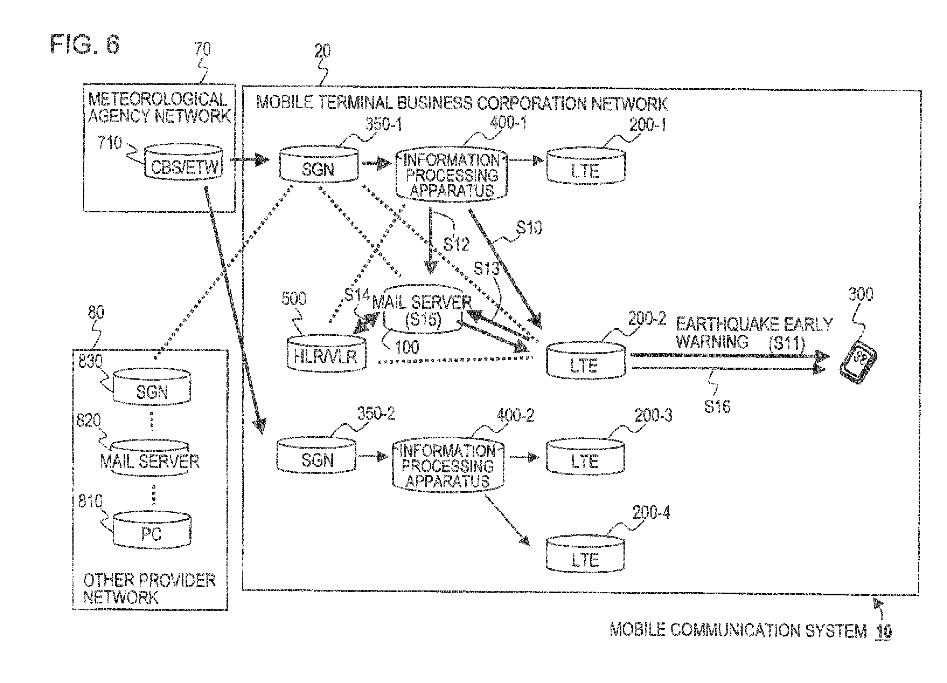

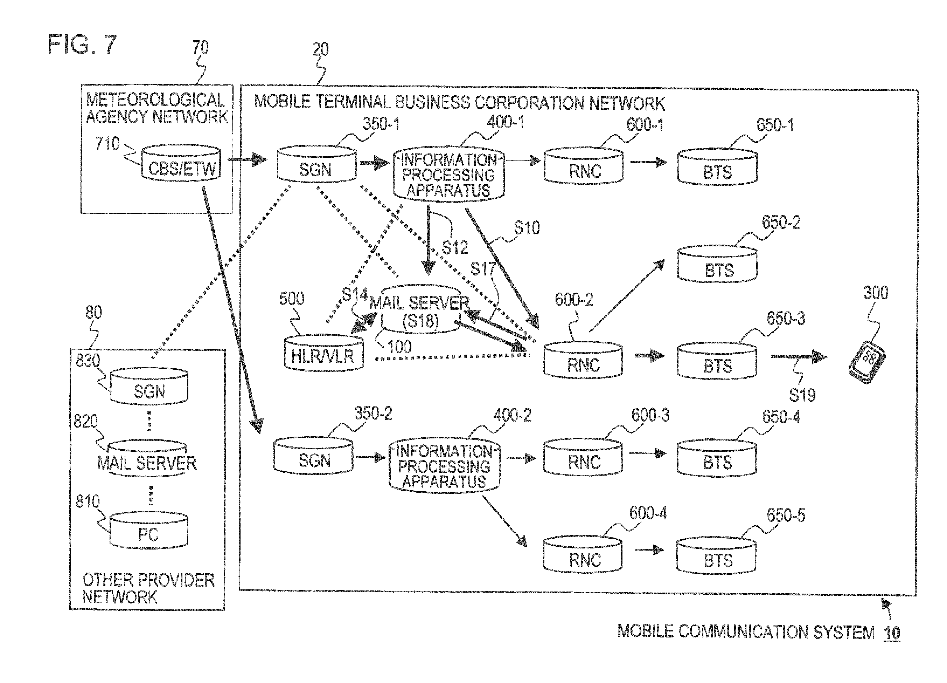

FIGS. 6 and 7 illustrate examples of mail delivery control when an early warning is distributed. FIG. 6 illustrates an example of mail delivery control in the LTE-based mobile communication system 10.

As illustrated in FIG. 6, when the information processing apparatus 400-1 receives an early warning transmitted from the CBS/ETW 710 through the SGN 350-1, the information processing apparatus 400-1 generates an Area Mail corresponding to the early warning to transmit to an LTE apparatus 200 (S10). The LTE apparatus 200 transmits the Area Mail to the terminal 300 (S11).

Meanwhile, when transmitting the Area Mail, the information processing apparatus 400-1 notifies the mail server 100 of monitoring information concerning Area Mail transmission (S12). Such notification of monitoring information may be transmitted from the LTE apparatus 200-2, for example (S13).

The mail server 100, on receiving the monitoring information, acquires user information subordinate to the LTE apparatus 200-2 from the HLR/VLR 500 (S14), and suspends mail automatic delivery to the user (S15).

Thereafter, if the mail server 100 does not receive monitoring information indicative of failure occurrence from the LTE apparatus 200-2 within a certain period, the mail server 100 resumes mail automatic delivery (S13). The above is such a case that, for example, actually a failure does not occur in spite of the notification of early warning, and in such a case, mail automatic delivery is resumed.

On the other hand, if the monitoring information concerning failure occurrence is received from the LTE apparatus 200-2 within the certain period, the mail server 100 continues suspending automatic delivery. The above is such a case that, for example, a disaster actually occurs after the early warning is distributed, and by the influence thereof, a failure occurs in the LTE apparatus 200-2 etc.

Thereafter, the LTE apparatus 200-2 transmits to the mail server 100 monitoring information concerning failure restoration at failure restoration, and the mail server 100 resumes suspended automatic delivery (S16).

FIG. 7 is a diagram illustrating an example of mail delivery control in the 3G-based mobile communication system 10. In regard to monitoring information indicative of Area Mail transmission or failure occurrence, the same is applicable as in the example of the LTE-based mobile communication system 10, excluding that the transmission thereof is made from the RNC 600-2. More specifically, the mail server 100, on receiving the monitoring information concerning Area Mail transmission (S12 or S17), suspends mail automatic delivery (S18), and resumes automatic delivery if monitoring information indicative of failure occurrence is not received from the RNC 600-2 within a certain period (S19). On the other hand, if the mail server 100 receives the monitoring information indicative of failure occurrence from the RNC 600-2 within the certain period, the mail server 100 continues suspending automatic delivery. Thereafter, on receiving monitoring information concerning failure restoration, the mail server 100 resumes automatic delivery (S19).

As such, in the mobile communication system 10, when the mail server 100 detects from monitoring information that an Area Mail is transmitted to the terminal 300, the mail server 100 predicts the occurrence of a failure and suspends mail automatic delivery, and if a disaster actually occurs, the mail server 100 continues suspending mail automatic delivery (S15, S18). Thus, if a disaster occurs, the mail server 100 does not deliver each mail, and accordingly, congestion caused by mail transmission to the terminal 300 does not occur. Therefore, the occurrence of congestion can be prevented if a disaster or a failure occurs, and communication such as a telephone call for safety confirmation and an emergency contact can be performed.

<Other configuration examples of the mobile communication system, and examples of transmission and reception information>

Next, other configuration examples of the mobile communication system 10 will be described, and also information examples transmitted and received in the mobile communication system 10 will be described.

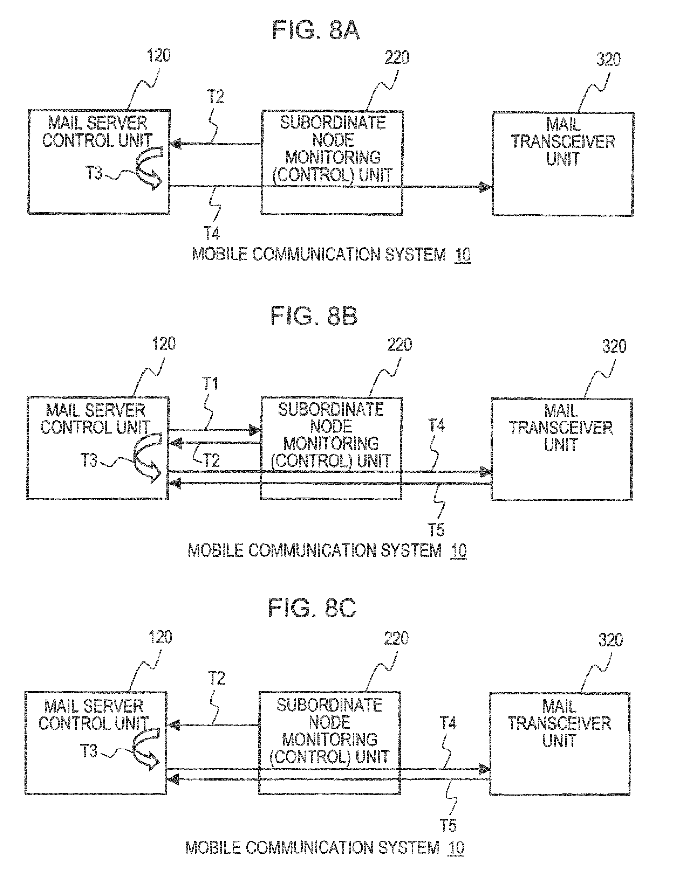

FIG. 8A is a diagram illustrating another configuration example of the mobile communication system 10. The mobile communication system 10 includes a mail server control unit 120, a subordinate node monitoring control unit (which may hereafter be referred to as subordinate node monitoring unit) 220, and a mail transceiver unit 320.

Relationship with the configuration examples of the mobile communication system 10 illustrated in FIGS. 2 and 3 is as follows, for example. Namely, the mail server control unit 120 corresponds to the mail server 100, for example. The subordinate node monitoring unit 220 corresponds to the LTE apparatuses 200-1 to 200-4, the RNCs 600-1 to 600-4 or the BTSs 650-1 to 650-5, for example. The mail transceiver unit 320 corresponds to the terminal 300, for example.

As illustrated in FIG. 8A, the subordinate node monitoring unit 220 generates monitoring information to notify the mail server control unit 120 (T2). The monitoring information includes, for example, an apparatus identification number, of which apparatus state is changed by the occurrence of a failure, a restriction rate, a congestion rate, a CPU occupancy rate, etc. Details of the monitoring information will be described later.

On receiving the monitoring information, the mail server control unit 120 performs mail delivery control (T3). The mail delivery control includes suspension and resumption of mail automatic delivery, for example.

The mail server control unit 120 notifies that mail delivery control is executed (T4). The above notification is, for example, mail delivery method change control report, which includes such information that mail automatic delivery is suspended or resumed.

Examples depicted in FIG. 8B to FIG. 9 illustrate other examples than the example depicted in FIG. 8A. Namely, in the example of FIG. 8B, the mail server control unit 120 issues a monitoring information request (T1), and the subordinate node monitoring unit 220, on receiving the request, generates monitoring information to notify the mail server control unit 120 (T2). Then, the mail server control unit 120 executes mail delivery control (T3), and notifies the mail transceiver unit 320 of the mail delivery method change control report (T4). On receiving the report, the mail transceiver unit 320 reports the confirmation result of the report (T5).

In the example of FIG. 8C, the subordinate node monitoring unit 220 reports monitoring information (T2), and the mail server control unit 120 executes mail delivery control (T3) and notifies the mail transceiver unit 320 of the mail delivery method change control report (T4). The mail transceiver unit 320 reports a confirmation result relative to the report (T5).

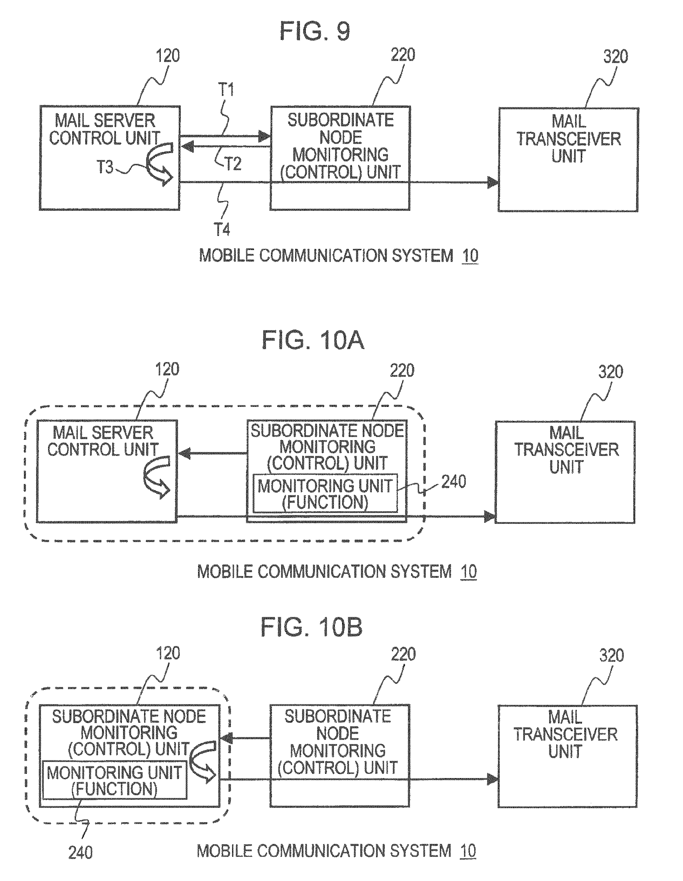

In the example of FIG. 9, the mail server control unit 120 issues a monitoring information request (T1), and the subordinate node monitoring unit 220, on receiving the request, generates monitoring information to notify the mail server control unit 120 (T2). Then, the mail server control unit 120 executes mail automatic delivery (T3), and notifies the mail transceiver unit 320 of the mail delivery method change control report (T4).

FIGS. 10A and 10B illustrate examples of an apparatus on which a monitoring unit (or monitoring function) for monitoring a failure etc. in a channel or an apparatus is installed, in the mobile communication system 10, for example.

As illustrated in FIG. 10A, in a case of a configuration in which the subordinate node monitoring unit 220 includes a monitoring unit 240, it is possible to monitor a failure in the subordinate node monitoring unit 220, on a channel between the subordinate node monitoring unit 220 and the mail transceiver unit 320, and on the mail transceiver unit 320. In this case, it is not possible for the monitoring unit 240 to monitor a failure in a mail server control unit 120 located in the upper-level side of the subordinate node monitoring unit 220, or a channel between the mail server control unit 120 and the subordinate node monitoring unit 220. In consideration of monitoring a failure in the apparatus and the channel on the upper-level side, the monitoring unit 240 may be provided, for example, in the mail server control unit 120 that is located in the uppermost level in the present mobile communication system 10, as illustrated in FIG. 10B.

In the present second embodiment, the following description will be given by taking an example of providing the monitoring unit 240 (or monitoring function) in the subordinate node monitoring unit 220.

<Configuration examples of mail server control unit, subordinate node monitoring unit and mail transceiver unit>

Next, respective configurations of the mail server control unit 120, the subordinate node monitoring unit 220 and the mail transceiver unit 320 will be described.

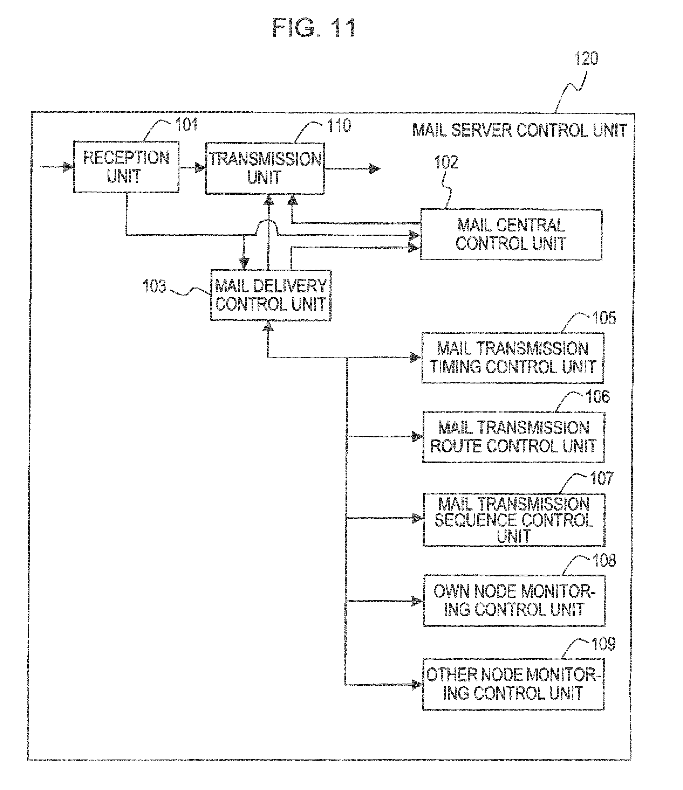

FIG. 11 is a diagram illustrating a configuration example of the mail server control unit 120. As described above, the mail server control unit 120 corresponds to, for example, the mail server 100.

The mail server control unit 120 includes a reception unit 101, a mail central control unit 102, a mail delivery control unit 103, a mail transmission timing control unit 105, a mail transmission route control unit 106, a mail transmission sequence control unit 107, an own node monitor control unit 108, an other node monitor control unit 109 and a transmission unit 110.

Here, the mail delivery management unit 151 in the first embodiment corresponds to, for example, the mail delivery control unit 103.

The reception unit 101 receives monitoring information transmitted from the subordinate node monitoring unit 220, the mail delivery method change control report transmitted from the terminal 300 through the subordinate node monitoring unit 220, etc. Also, the reception unit 101 receives an electronic mail and other information transmitted from the SGN 350-1 and the information processing apparatus 400-1. Further, the reception unit 101 receives user information transmitted from the HLR/VLR 500. The reception unit 101 outputs the received monitoring information and the user information to the mail delivery control unit 103, and also outputs the received electronic mail etc. to the mail central control unit 102.

The mail central control unit 102 functions, for example, as a central control unit of the mail server control unit 120 to perform mail automatic delivery. For example, the mail central control unit 102 determines a delivery destination (which one of the LTE apparatuses 200-1, 200-2, or which one of the RNCs 600-1 to 600-4) of the received electronic mail, and then transmits the received electronic mail to the delivery destination, without waiting for an acquisition request from the terminal 300.

The mail delivery control unit 103 performs mail delivery control on the basis of the monitoring information, for example. On receiving the monitoring information concerning failure occurrence, for example, the mail delivery control unit 103 determines to suspend mail automatic delivery, and outputs to the mail central control unit 102 a signal to instruct to suspend mail automatic delivery, so as to control to suspend automatic delivery. In this case, it may also be possible for the mail delivery control unit 103 to output to the transmission unit 110 the signal to instruct to suspend mail automatic delivery.

Further, on receiving monitoring information concerning failure restoration, for example, the mail delivery control unit 103 determines to resume mail automatic delivery, and outputs to the mail central control unit 102 a signal to instruct to resume mail automatic delivery, so as to control to resume automatic delivery. Details of mail delivery control will be described later.

The mail delivery control unit 103, when suspending or resuming mail automatic delivery, generates the mail delivery method change control report that includes information to that effect, to transmit to the terminal 300 through the transmission unit 110. Details of the mail delivery method change control report will be described later.

The mail central control unit 102 or the mail delivery control unit 103 holds system data in an internal memory, for example, and transmits the system data to the subordinate node monitoring unit 220 through the transmission unit 110. The system data include values or data related to electronic mail delivery control. Details of the system data will be described later.

The mail transmission timing control unit 105, when transmitting an electronic mail during suspending automatic delivery, for example, calculates appropriate transmission timing (or transmission interval) of each electronic mail, so as to control the electronic mail to be transmitted at the calculated transmission timing. During suspending automatic delivery, it may be possible for the mail server 100 to suspend electronic mail transmission, or to transmit the electronic mail at appropriate timing depending on the loads and the congestion levels of a channel and an apparatus. The mail transmission timing control unit 105 calculates appropriate mail transmission timing in such a case. For example, the mail transmission timing control unit 105 outputs the calculated transmission timing to the mail delivery control unit 103, and then the mail delivery control unit 103 controls the transmission unit 110 to transmit the electronic mail at the transmission timing. Details of the transmission timing calculation will be described later.

The mail transmission route control unit 106, when transmitting an electronic mail during suspending automatic delivery, for example, determines a transmission route of the electronic mail, so that the electronic mail is transmitted on the determined route. For example, during suspending automatic delivery, the mail server 100 may also be capable of transmitting the electronic mail, using another route than the route of failure occurrence (for example, a route to another mail server to which the terminal 300 is subordinate, through the global Internet, or the like). In such a case, the mail transmission route control unit 106 determines the mail transmission route. For example, the mail transmission route control unit 106 outputs the determined transmission route to the mail delivery control unit 103, and then the mail delivery control unit 103 outputs the determined route information to the transmission unit 110. By including the transmission address of a transmission destination, an apparatus address to be passed through, etc. into the electronic mail and by the transmission thereof, the transmission unit 110 can deliver the electronic mail according to the determined route information. Details of the route determination will be described later.

The mail transmission sequence control unit 107, when transmitting each electronic mail during suspending automatic delivery, controls to change the transmission sequence of the electronic mail to transmit, for example. During suspending automatic delivery, for example, it may also be possible for the mail server 100 to transmit the electronic mail after changing the sequence thereof from a sequence of arrival to a sequence of size, according to the load or the congestion level of an apparatus and a channel. In such a case, for example, the mail transmission sequence control unit 107 determines the mail transmission sequence. For example, the mail transmission sequence control unit 107 outputs information concerning the determined transmission sequence to the transmission unit 110 through the mail delivery control unit 103, and the transmission unit 110 transmits the electronic mail according to the determined transmission sequence.

The own node monitor control unit 108 monitors inside the mail server 100, for example, so as to monitor congestion, a failure, etc. to output the monitoring result to the mail delivery control unit 103.

The other node monitor control unit 109 monitors other node apparatus, including the LTE apparatuses 200-1 to 200-4, the RNCs 600-1 to 600-4, the BTSs 650-1 to 650-5, for example. On receiving the monitoring results, etc. concerning other node apparatuses from the mail delivery control unit 103, for example, the other node monitor control unit 109 stores the monitoring results, etc. into an internal memory etc., and appropriately reads out to notify the mail delivery control unit 103.

The transmission unit 110 transmits the mail delivery method change control report generated in the mail delivery control unit 103 toward the terminal 300, and transmits the received mail toward the terminal 300 under the control of the mail central control unit 102. Further, the transmission unit 110 receives from the mail delivery control unit 103 a notification concerning an inquiry about an in-zone user, to transmit to the HLR/VLR 500.

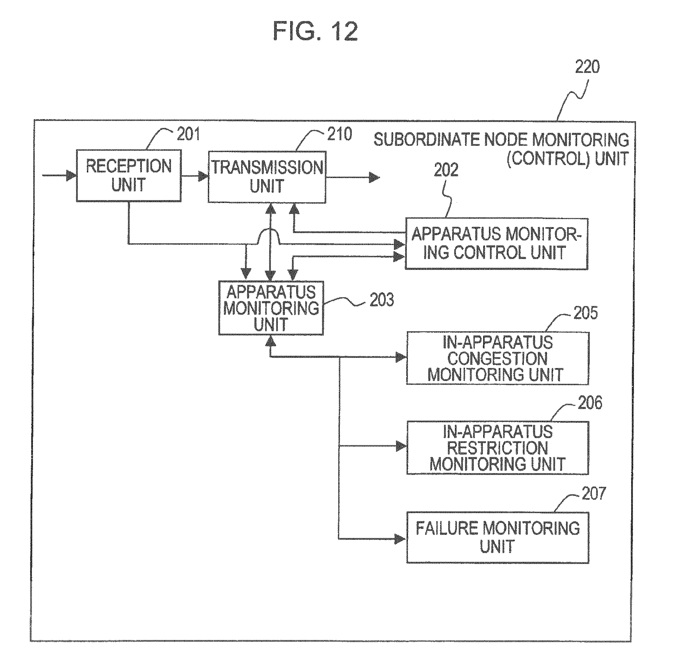

FIG. 12 is a diagram illustrating a configuration example of the subordinate node monitoring unit 220. As described earlier, the subordinate node monitoring unit 220 corresponds to, for example, the LTE apparatuses 200-1 to 200-4 in the example of the LTE-based mobile communication system 10, or corresponds to, for example, the RNCs 600-1 to 600-4 or the BTSs 650-1 to 650-5 in the example of the 3G-based mobile communication system 10.

The subordinate node monitoring unit 220 includes a reception unit 201, a transmission monitoring control unit 202, an apparatus monitoring unit 203, an in-apparatus congestion monitoring unit 205, an in-apparatus restriction monitoring unit 206, a failure monitoring unit 207 and a transmission unit 210.

The reception unit 201 receives the electronic mail, mail delivery method change control report, system data, etc. transmitted from the mail server 100, for example. The reception unit 201 also receives an Area Mail, restriction information, etc. distributed from the information processing apparatus 400, for example. The reception unit 201 outputs the electronic mail, the mail delivery method change control report, etc. to the transmission unit 210, and outputs the system data, the restriction information, etc. to the apparatus monitoring control unit 202 or the apparatus monitoring unit 203.

Here, the reception unit 201 can also receive a radio signal transmitted from the terminal 300 when the subordinate node monitoring unit 220 corresponds to the LTE apparatuses 200-1 to 200-4 or the BTSs 650-1 to 650-5. In the above case, the reception unit 201 extracts data etc. from the received radio signal. For that purpose, the reception unit 201 may include a frequency conversion circuit, a modulation circuit, an error correction decoding circuit, etc.

The apparatus monitoring control unit 202 monitors, for example, the reception unit 201 and the transmission unit 210. Also, for example, the apparatus monitoring control unit 202 receives the system data, to sets the reception unit 201 and the transmission unit 210 to hold values included in the system data.

The apparatus monitoring unit 203 receives congestion information from the in-apparatus congestion monitoring unit 205, restriction information from the in-apparatus restriction monitoring unit 206, and failure occurrence information from the failure monitoring unit 207, to generate monitoring information on the basis of the above information and the system data. The apparatus monitoring unit 203 transmits the monitoring information to the mail server 100 through the transmission unit 210.

Here, the apparatus monitoring unit 203 may also generate the monitoring information on receiving a monitoring information request notification. The apparatus monitoring unit 203 outputs the restriction information received from the reception unit 201 to the in-apparatus restriction monitoring unit 206, for example.

The in-apparatus congestion monitoring unit 205 collects and manages congestion information inside the subordinate node monitoring unit 220, for example. The congestion information, which is, for example, information concerning congestion that occurs in the subordinate node monitoring unit 220, includes a congestion rate, a traffic amount, a CPU occupancy rate, etc. The in-apparatus congestion monitoring unit 205 calculates the congestion rate and the traffic amount, on the basis of data transmitted and received in the reception unit 201 and the transmission unit 210, etc., for example. Also, for example, the in-apparatus congestion monitoring unit 205 calculates the CPU occupancy rate by calculating an occupancy rate of each control unit 202, etc. The in-apparatus congestion monitoring unit 205 outputs the calculated congestion information to the apparatus monitoring unit 203.

The in-apparatus restriction monitoring unit 206 monitors the system restriction rate of the own apparatus by monitoring the data amount of data transmitted and received by the reception unit 201 and the transmission unit 210, for example. The in-apparatus restriction monitoring unit 206 outputs the monitored result to the apparatus monitoring unit 203, for example, as the restriction information of the own station. Also, the in-apparatus restriction monitoring unit 206 receives restriction information transmitted from the upper-level apparatus through the apparatus monitoring unit 203, and controls the reception unit 201 and the transmission unit 210 to restrict the data amount of transmitted and received data etc. in such a manner that the system restriction rate included in the restriction information is produced.

Here, the system restriction rate signifies a restriction rate to a data transmission and reception amount, which represents the ratio of a transmittable and receivable data amount to a predetermined amount (for example, maximum data transmission and reception amount). For example, the higher the system restriction rate is, the less the transmittable and receivable data amount becomes.

The failure monitoring unit 207 collects and manages failure occurrence information of an apparatus and a channel, for example. The failure monitoring unit 207 receives failure occurrence information having occurred in the subordinate apparatus, through the reception unit 201, the apparatus monitoring unit 203, etc., to retain in an internal memory etc., for example. Also, the failure monitoring unit 207 monitors a failure in the reception unit 201 and the transmission unit 210, and monitors a channel connected to the subordinate node monitoring unit 220, and on the occurrence of a failure, generates failure occurrence information, to retain in the internal memory, etc. The failure monitoring unit 207 outputs the collected failure occurrence information to the apparatus monitoring unit 203, for example.

The transmission unit 210 transmits the electronic mail, the mail delivery method change control report, etc. that are received from the reception unit 201, toward the terminal 300. Also, the transmission unit 210 transmits the monitoring information received from the apparatus monitoring unit 203, to the mail server 100. When the subordinate node monitoring unit 220 corresponds to the LTE apparatuses 200-1 to 200-4 or the BTSs 650-1 to 650-5, the transmission unit 210 converts the electronic mail data into a radio signal to transmit to the terminal 300. To enable such conversion, the transmission unit 210 may include an error correction coding circuit, a modulation circuit, a frequency conversion circuit, etc.

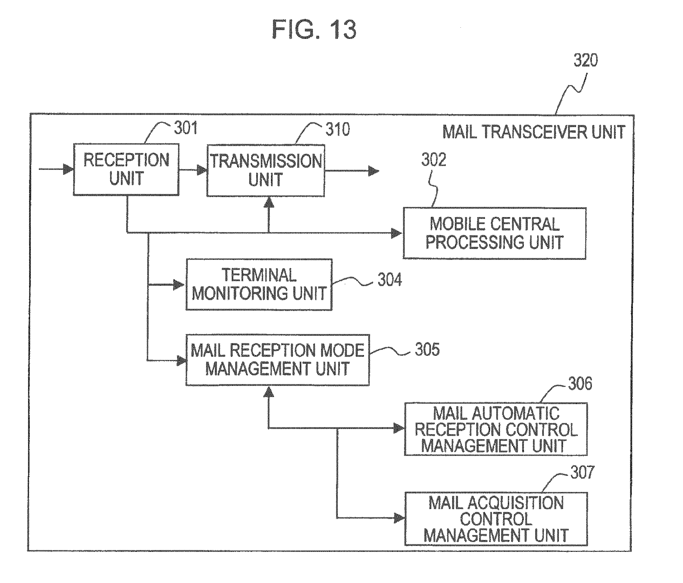

FIG. 13 is a diagram illustrating a configuration example of the mail transceiver unit 320. As described earlier, the mail transceiver unit 320 corresponds to the terminal 300, for example.

The mail transceiver unit 320 includes a reception unit 301, a mobile central processing unit 302, a terminal monitoring unit 304, a mail reception mode management unit 305, a mail automatic reception control management unit 306, a mail acquisition control management unit 307 and a transmission unit 310.

The reception unit 341 in the first embodiment corresponds to the reception unit 301, for example.

The reception unit 301 receives an electronic mail and the mail delivery method change control report transmitted from the subordinate node monitoring unit 220, so as to output the electronic mail etc. to the mobile central processing unit 302, and output the mail delivery method change control report etc. to the mail reception mode management unit 305.

The mobile central processing unit 302 controls each unit in the mail transceiver unit 320. For example, the mobile central processing unit 302 controls to display character information and image information that are included in the electronic mail on a display unit, and output voice information from a speaker.

The terminal monitoring unit 304 monitors the state of the mail transceiver unit 320, and on detecting the occurrence of a failure while monitoring the reception unit 301, the transmission unit 310, etc., generates failure occurrence information, monitoring information etc. The terminal monitoring unit 304 further transmits the failure occurrence information, the monitoring information, etc. to the mail server 100 through the transmission unit 310 etc.

The mail reception mode management unit 305 monitors the mail delivery method change control report transmitted from the subordinate node monitoring unit 220, for example, to manage an electronic mail reception mode. The mail reception mode management unit 305 outputs the received mail delivery method change control report, to the mail automatic reception control management unit 306 and the mail acquisition control management unit 307, for example.

The mail automatic reception control management unit 306 monitors the mail delivery method change control report transmitted from the subordinate node monitoring unit 220, and according to the mail delivery method change control report, controls the start or the suspension of a mail automatic reception state.

For example, when the mail automatic reception control management unit 306 receives the mail delivery method change control report that includes information indicative of the suspension of the automatic delivery of electronic mail, the mail automatic reception control management unit 306 controls the reception unit 301 to suspend the automatic reception state of electronic mail. In this case, for example, on receiving a mail, the reception unit 301 performs processing such as discarding the mail.

Also, when the mail automatic reception control management unit 306 receives the mail delivery method change control report that includes information indicative of the resumption of automatic electronic mail delivery, the mail automatic reception control management unit 306 controls the reception unit 301 to resume the automatic reception state of electronic mail. In this case, for example, the reception unit 301 receives an automatically delivered electronic mail, to output to the mobile central processing unit 302 etc.

The mail acquisition control management unit 307 monitors the mail delivery method change control report transmitted from the subordinate node monitoring unit 220, for example, and according to the mail delivery method change control report, retains the electronic mail reception state in the mail transceiver unit 320. The mail acquisition control management unit 307 manages, for example, a state whether or not to receive a mail transmitted by automatic delivery in the mail transceiver unit 320, etc.

The transmission unit 310 transmits the failure occurrence information, the monitoring information, etc. that are output from the terminal monitoring unit 304, to the subordinate node monitoring unit 220. Also, the transmission unit 310 transmits an electronic mail etc. generated in the mobile central processing unit 302, to the subordinate node monitoring unit 220.

Additionally, in order to transmit and receive radio signals between with the subordinate node monitoring unit 220, the reception unit 301 and the transmission unit 310 may internally provide frequency conversion circuits and modulation circuits, to enable extraction of electronic mail data etc. from a radio signal and conversion of data etc. into a radio signal.

<Operation example>

Next, a description will be given on details of an operation example concerning the delivery control of electronic mail. First, the operation example of overall delivery control, along with the details of the system data and the monitoring information, and next, control performed during suspending automatic delivery, and finally, each sequence example will be described.

<1. Operation example of mail delivery control>

The operation example of mail delivery control will be described, followed by the detailed description of system data, monitoring information, mail delivery method change control report, etc.

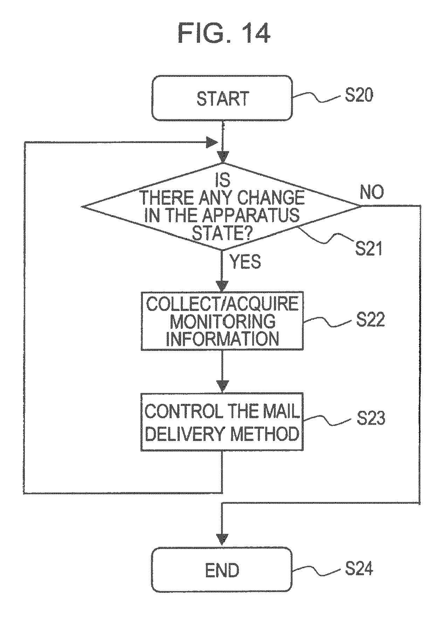

FIG. 14 is a flowchart illustrating the operation example of the overall electronic mail delivery control. When starting processing (S20), the mobile communication system 10 discriminates the existence or non-existence of an apparatus state change (S21).

For example, the mail server control unit 120 transmits system data to the subordinate node monitoring unit 220. The subordinate node monitoring unit 220 compares limit values included in the system data with restriction information, congestion information, etc. calculated in the own station, to discriminate the existence or non-existence of an apparatus state change.

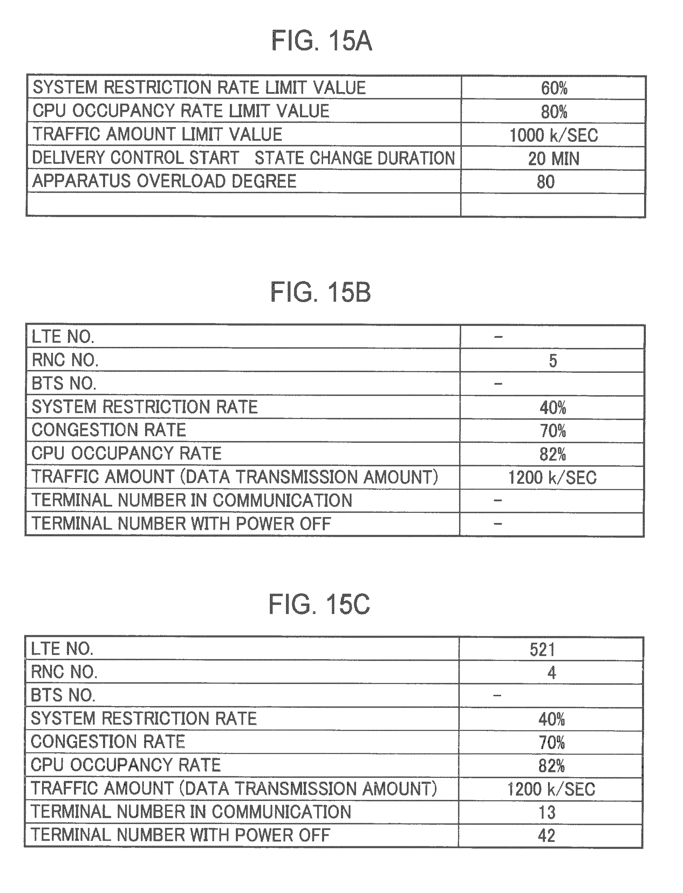

Now, the details of the system data will be described in the following. FIG. 15A is a diagram illustrating an example of the system data. The system data includes a system restriction rate limit value, a CPU occupancy rate limit value, a traffic amount limit value, a delivery control start_state change duration, and an apparatus overload degree. Each value of the system data is generated in the mail delivery control unit 103 of the mail server control unit 120 etc., for example, and represents each criterion value to determine whether or not automatic delivery is to be suspended.

The system restriction rate limit value represents, for example, a limit value to a system restriction rate in regard to data transmitted and received in the mobile communication system 10, to designate the start of mail delivery control when the system restriction rate in each apparatus reaches the limit value or greater.

The CPU occupancy rate limit value represents, for example, a limit value to a CPU occupancy rate in each apparatus, to designate the start of mail delivery control when the CPU occupancy rate in each apparatus reaches the limit value or greater. Here, the CPU occupancy rate represents, for example, the use amount of CPU (each unit 102 in the apparatus, for example) used in a certain period.

The traffic amount limit value represents, for example, a limit value to a traffic amount in each apparatus, to designate the start of mail delivery control when the traffic amount in each apparatus reaches the limit value or greater. The traffic amount represents, for example, a data amount transmitted and received in each apparatus.

The delivery control start_state change duration represents, for example, a state change duration to start delivery control of electronic mail.

Further, the apparatus overload degree is, for example, an index to represent a maximum performance value of each apparatus, and represents a transmission load rate at which data is unable to transmit in the apparatus.

The subordinate node monitoring unit 220 detects, for example, whether or not each apparatus state changes, on the basis of the limit values (the system restriction rate limit value, the CPU occupancy rate limit value and the traffic amount limit value) included in the system data. For example, each limit value includes an upper-limit value and a lower-limit value.

Namely, when an event in which the calculated system restriction rate, the CPU occupancy rate and the traffic amount respectively exceed the limit values included in the system data continues for the period of delivery control start_state change duration, the subordinate node monitoring unit 220 discriminates that there is an apparatus state change caused by failure occurrence. In this case, the subordinate node monitoring unit 220 generates monitoring information concerning failure occurrence.

Also, when an event in which the calculated system restriction rate, the CPU occupancy rate and the traffic amount are within the respective limit values included in the system data continues for the period of delivery control start_state change duration, the subordinate node monitoring unit 220 discriminates that there is an apparatus state change caused by failure restoration. In this case, the subordinate node monitoring unit 220 generates monitoring information concerning failure restoration.

In other cases than the above, the subordinate node monitoring unit 220 discriminates there is no apparatus state change.

If a failure occurs in the subordinate node monitoring unit 220 (or the LTE apparatuses 200-1 to 200-4, the RNCs 600-1 to 600-4 or the BTSs 650-1 to 650-5) and the apparatuses subordinate thereto, the system restriction rate, the CPU occupancy rate or the traffic amount changes. Also, if a failure occurs in a channel between with the subordinate apparatus, for example, a change in the system restriction rate or the traffic amount occurs.

Therefore, by calculating the system restriction rate, the CPU occupancy rate and the traffic amount to compare with the limit values, the subordinate node monitoring unit 220 can detect that an apparatus state is changed because of continued failure occurrence in the own apparatus, a subordinate apparatus or a channel between with the subordinate apparatus.

For example, the apparatus monitoring unit 203 discriminates the existence or non-existence of a state change by the reception of a system restriction rate in an apparatus from the in-apparatus restriction monitoring unit 206, and a CPU occupancy rate or a traffic amount from the in-apparatus congestion monitoring unit 205, and by the comparison thereof with the comparison thereof with each limit value in the system data.

Referring back to FIG. 14, on detecting an apparatus state change ("Yes" in S21), the subordinate node monitoring unit 220 generates monitoring information to transmit to the mail server control unit 120 (S22).

Hereafter, details of monitoring information etc. will be described. FIGS. 15B, 15C are diagrams illustrating examples of the monitoring information. The monitoring information includes, for example, each item of "LTE number", "RNC number", "BTS number", "system restriction rate"; "congestion rate", "CPU occupancy rate", "traffic amount (data transmission amount)"; "terminal number in communication" and "terminal number of power switched OFF".

Each of "LTE number", "RNC number" and "BTS number" represents, for example, each identification number of the LTE apparatuses 200-1 to 200-4, the RNCs 600-1 to 600-4 and the BTSs 650-1 to 650-4 in which a failure or restoration therefrom occurs. The apparatus monitoring unit 203 of the subordinate node monitoring unit 220, on receiving failure occurrence information of the own apparatus from the failure monitoring unit 207, inserts the identification number of the own apparatus into the area of concern.

"System restriction rate" represents, for example, a system restriction rate when the monitoring information is generated in a target apparatus. For example, a system restriction rate calculated by the in-apparatus restriction monitoring unit 206 of the subordinate node monitoring unit 220 is inserted into the area of concern.

"Congestion rate" represents, for example, a congestion rate when monitoring information is generated in a target apparatus. For example, a congestion rate calculated by the in-apparatus congestion monitoring unit 205 of the subordinate node monitoring unit 220 is inserted.

"CPU occupancy rate" represents, for example, a CPU occupancy rate when the monitoring information is generated in the target apparatus. For example, a CPU occupancy rate calculated by the in-apparatus congestion monitoring unit 205 of the subordinate node monitoring unit 220 is inserted.

"Traffic amount (data transmission amount)" represents, for example, a traffic amount when the monitoring information is generated in the target apparatus. For example, a traffic amount calculated by the in-apparatus congestion monitoring unit 205 of the subordinate node monitoring unit 220 is inserted.

"Terminal number in communication" indicates, for example, information to identify a user (or terminal 300) being in communication. Also, "Terminal number of power switched OFF" indicates, for example, information to identify a user (or terminal 300) being not in communication yet.

Here, the apparatus information signifies, for example, an identification number included in "LTE number", "RNC number" and "BTS number". Also, the congestion information signifies, for example, information included in "System restriction rate", "CPU occupancy rate" and "Traffic amount (data transmission amount)".

In the example of the monitoring information in FIG. 15B etc., for example, it may also be possible to include a message number representing that the apparatus state is changed because of either failure occurrence or failure restoration. For example, if the message number is "10", the monitoring information represents the monitoring information concerning failure occurrence, whereas if the message number is "11", the monitoring information represents monitoring information concerning failure restoration.

The example of the monitoring information depicted in FIG. 15B represents that, because of failure occurrence in an RNC 600-1 to 600-4 of which "RNC number" is "5", the apparatus state is changed. Also, the example of the monitoring information depicted in FIG. 15C represents that, because of failure occurrence in an LTE apparatus 200-1 to 200-4 of which "LTE number" is "521" and an RNC 600-1 to 600-4 of which "RNC number" is "4"; each apparatus state is changed.

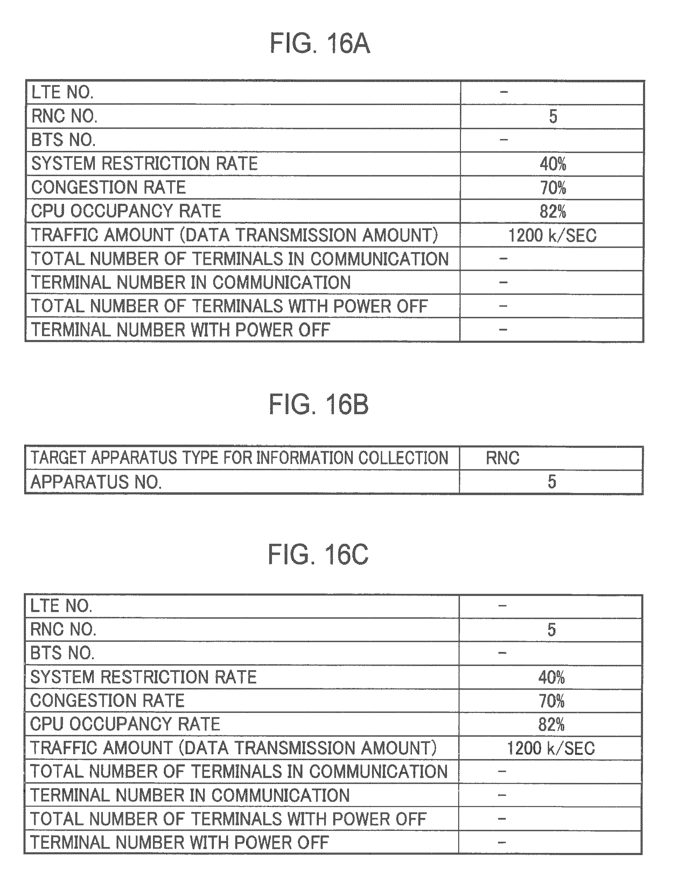

FIG. 16A represents an example of monitoring information, FIG. 16B represents an example of a monitoring information request (T1 in FIG. 8B, for example), and FIG. 16C represents an example of a monitoring information response (T2 in FIG. 8B, for example), respectively.

As depicted in FIG. 16B for example, the monitoring information request includes the target apparatus type of which the monitoring information is requested ("Target apparatus type for information collection") and an apparatus identification number ("Apparatus number").

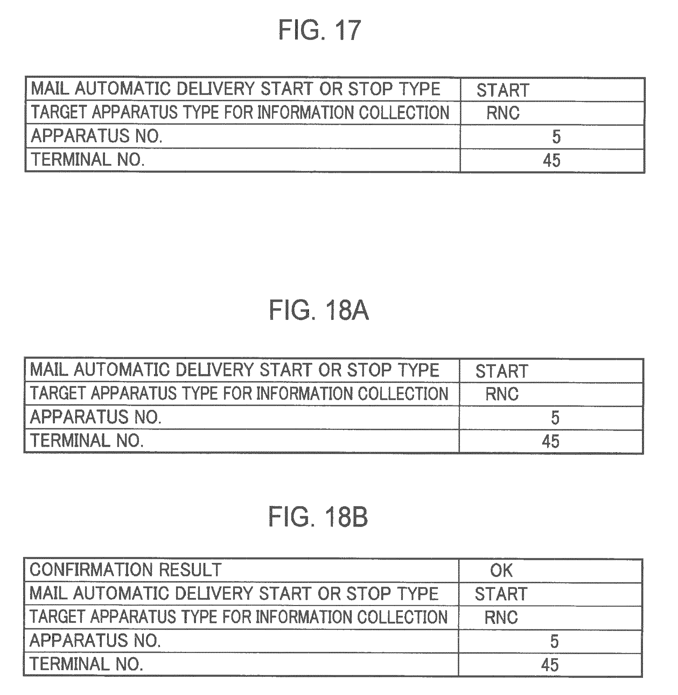

Also, as depicted in FIG. 17 for example, information included in the monitoring information response to the monitoring information request is the same as in the monitoring information.

FIG. 17 is a diagram illustrating mail delivery control information. The mail delivery control information is information that is generated in the mail server control unit 120 on receiving the monitoring information, so that the mail server control unit 120 generates the mail delivery method change control report on the basis of the mail delivery control information.

The mail delivery control information includes "Mail automatic delivery start or stop type"; "Target apparatus type for information collection"; "Apparatus number" and "Terminal number".

"Mail automatic delivery start or stop type" represents, for example, a type indicating whether the automatic delivery of electronic mail is to be suspended or started. "stop" represents the suspension of automatic delivery of electronic mail, and "start" represents the start of automatic delivery of electronic mail.

"Target apparatus type for information collection" represents, for example, a target apparatus type to which automatic mail delivery control is to be performed, "Apparatus number" represents, for example, a target apparatus identification number to which automatic delivery control is to be performed, and "Terminal number" represents, for example, an apparatus identification number on which automatic delivery control is performed.

The monitoring information, the monitoring information response, etc. are generated in the apparatus monitoring unit 203 of the subordinate node monitoring unit 220.

In the example of the mail delivery control information depicted in FIG. 17, mail automatic delivery is started, and the target apparatuses thereto are an "RNC" of which identification number is "5" and a terminal 300 of which identification number is "45":

FIG. 18A illustrates an example of the mail delivery method change control report that is reported from the mail server 100. As described earlier, information included in the mail delivery method change control report is the same as information included in the mail delivery control information, for example.

FIG. 18B is a diagram illustrating an example of a confirmation result concerning the mail delivery method change control report. In the confirmation result, an item of "Confirmation result" is further included. In "Confirmation result"; for example, information whether or not the reception of the mail delivery method change control report is confirmed is inserted.

The mail delivery control information, the mail delivery method change control report, etc. are generated in, for example, the mail delivery control unit 103 of the mail server control unit 120.

Referring back to FIG. 14, the mail server control unit 120, when acquiring the monitoring information (S22), executes the automatic delivery control of electronic mail (which is described in FIG. 14 as "mail delivery method control") (S23). For example, the mail server control unit 120 controls to suspend mail automatic delivery on receiving the monitoring information concerning failure occurrence, and resume mail automatic delivery on receiving the monitoring information concerning failure restoration.

Then the processing moves to S21, and the mobile communication system 10 repeats the above-mentioned processing.

On the other hand, if there is no apparatus state change ("No" in S21), the mobile communication system 10 completes delivery control processing (S24).

<2. Control executed during suspension of automatic delivery>

In the mobile communication system 10, mail automatic delivery is not executed during suspending automatic delivery. However, depending on a load condition and a congestion level in the mobile communication system 10, although automatic delivery is not executed, each mail can be transmitted by dividing the mail with a limited size or by exchanging delivery sequence, or at appropriate transmission timing (or transmission intervals).

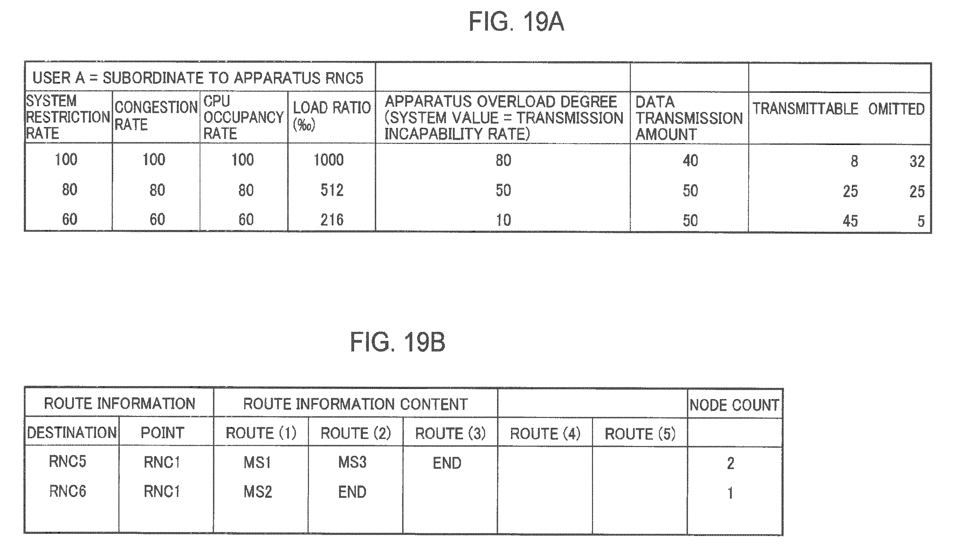

Hereafter, a description will be given on an example of control executed during suspending automatic delivery. FIG. 19A is a diagram illustrating an exemplary case of performing division transmission with a limited delivery size.

The mail server control unit 120 can calculate a data amount transmittable of electronic mail even in a situation of failure occurrence, on the basis of information included in the monitoring information and the system data.

For example, based on a system restriction rate, a congestion rate and a CPU occupancy rate in the monitoring information, the mail server control unit 120 calculates a load ratio of each apparatus of interest. For example, the load ratio can be calculated by a following formula. In the example of FIG. 19A, "1000", "512'; "216" are calculated as the load ratio (‰).

$$\text{Load ratio} = \text{System restriction rate} \times \text{Congestion rate} \times \text{CPU occupancy rate} \quad ......(1)$$

Also, the mail server control unit 120 calculates a transmittable data count that can be transmitted on the basis of an apparatus overload degree, included in the system data, and the mail transmission data amount. For example, the transmittable data count can be calculated by a following formula. In the example of FIG. 19A, each value such as "8", "25"; "45" is calculated as the transmittable data count.

$$\text{Transmittable data count} = \text{Data transmission amount} - \text{Data transmission}$$
$$\text{amount} \times \text{apparatus overload degree} \dots\dots (2)$$

The mail server control unit 120 transmits each mail with the transmittable data count or smaller, and when the mail data amount is larger than the transmittable data count, transmits each mail after dividing into a plurality of times. For example, the mail delivery control unit 103 calculates such values, so as to execute to control the transmission unit 110 to transmit each mail with the calculated transmittable data count or smaller.

By means of such division transmission, for example, it is possible to perform electronic mail transmission even during suspending automatic delivery to the extent not to generate congestion.

Additionally, when the load ratio calculated by expression (1) is a threshold or higher, it may also be possible for the mail server control unit 120 to control to inhibit division transmission as a result of discrimination that the degree of failure occurrence reaches a certain degree or larger and therefore mail transmission is not possible.

The mail server control unit 120 may also be capable of calculating transmission timing, on the basis of the calculated transmittable data count. For example, the mail server control unit 120 may also be capable of calculating electronic mail transmission timing to enable a transmittable data count to reach within a certain period.

Such calculation is performed in the mail transmission timing control unit 105, for example. Namely, the mail transmission timing control unit 105 receives the transmittable data count from the mail delivery control unit 103, and calculates transmission timing so that mail transmission of the transmittable data count is completed within the certain period. The mail delivery control unit 103 receives the calculation result, to enable controlling the transmission unit 110 to execute electronic mail transmission according to the calculated timing.

Further, the mail server control unit 120, when calculating the transmittable data count, may also be capable of calculating delivery sequence on the basis of the transmittable data count. For example, the mail server control unit 120 rearranges the delivery sequence of packet data included in electronic mails, from the sequence of packet data arrival to sequence from the smallest packet size to the largest, so as to enable the transmittable data count to reach within the certain period.

For example, from the reception unit 101 through the mail delivery control unit 103, the mail transmission sequence control unit 107 receives information including the arrival sequence of received mails, to calculate delivery sequence on the basis of the above information. Then, the mail transmission sequence control unit 107 transfers the calculation result to the mail delivery control unit 103, so as to enable the mail delivery control unit 103 to control the transmission unit 110 to execute transmission according to the above calculated sequence.

Further, the mail server control unit 120 may also be capable of avoiding an apparatus and a channel of failure occurrence, for example, by delivering an electronic mail on a delivery route through the global Internet. FIG. 19B is an example of a route list table.

For example, the mail transmission route control unit 106 determines a transmission route to the destination on the basis of the route list table retained in an internal memory etc. In this case, when there are a plurality of identical destinations, the mail transmission route control unit 106 selects a route including the smallest number of nodes. When the load ratio is "800" (‰) or larger, the mail transmission route control unit 106 may also be capable of determining that electronic mail transmission is not possible, and inhibiting to change the delivery route. The mail delivery control unit 103 receives the determined transmission route information, to transmit the mail by designating the destination on the determined delivery route, as a mail transmission destination.

<3. Sequence examples>

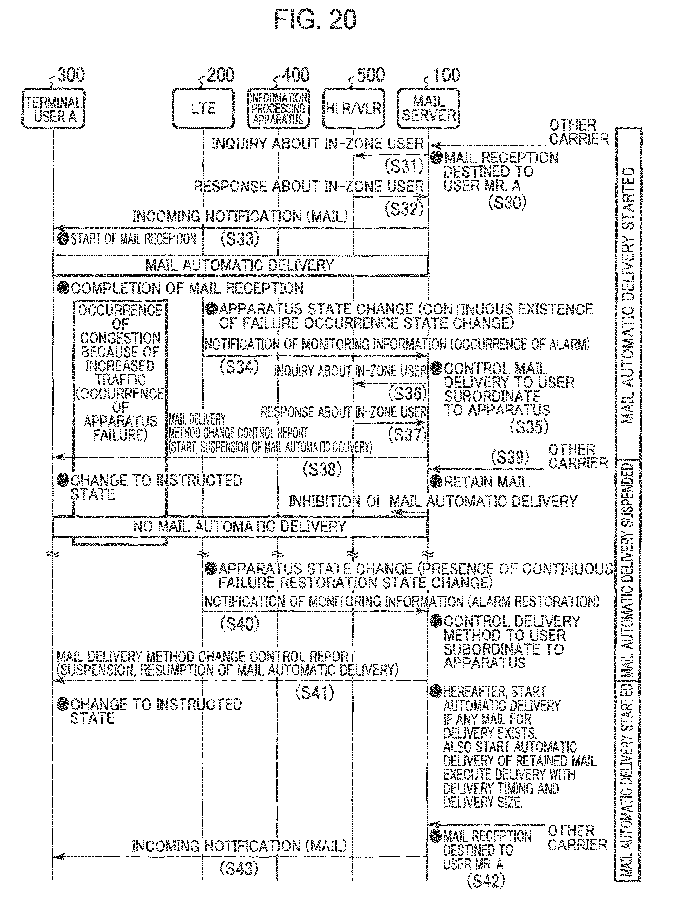

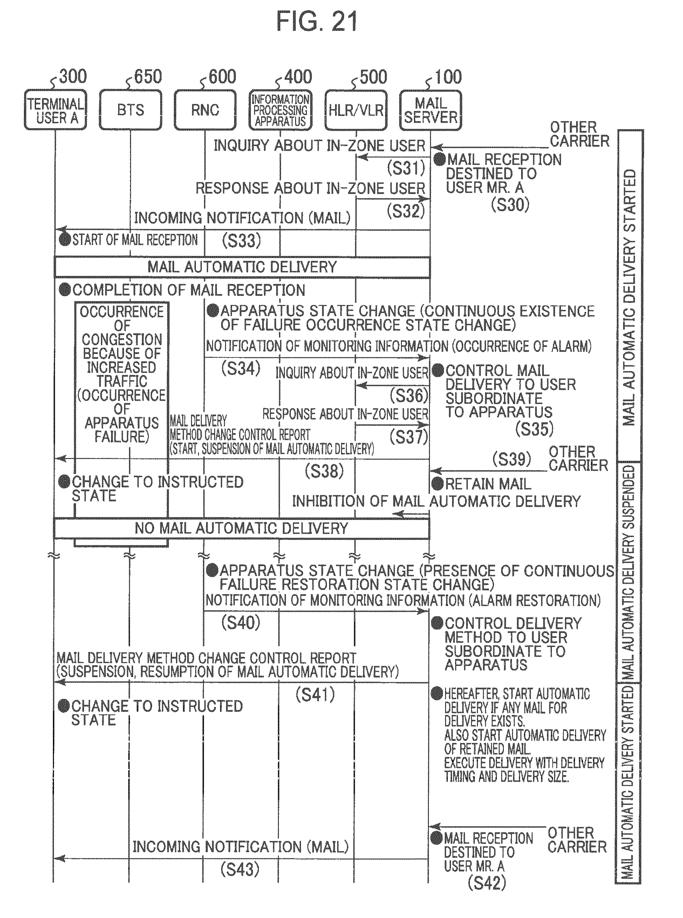

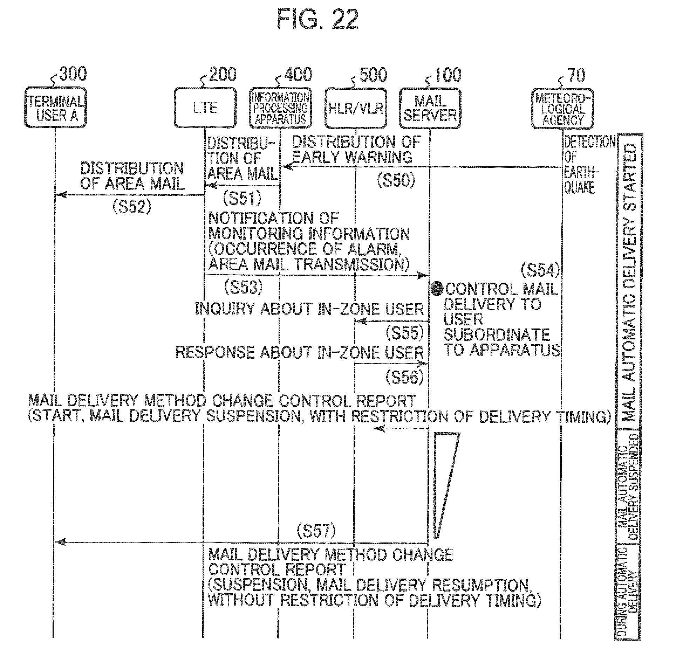

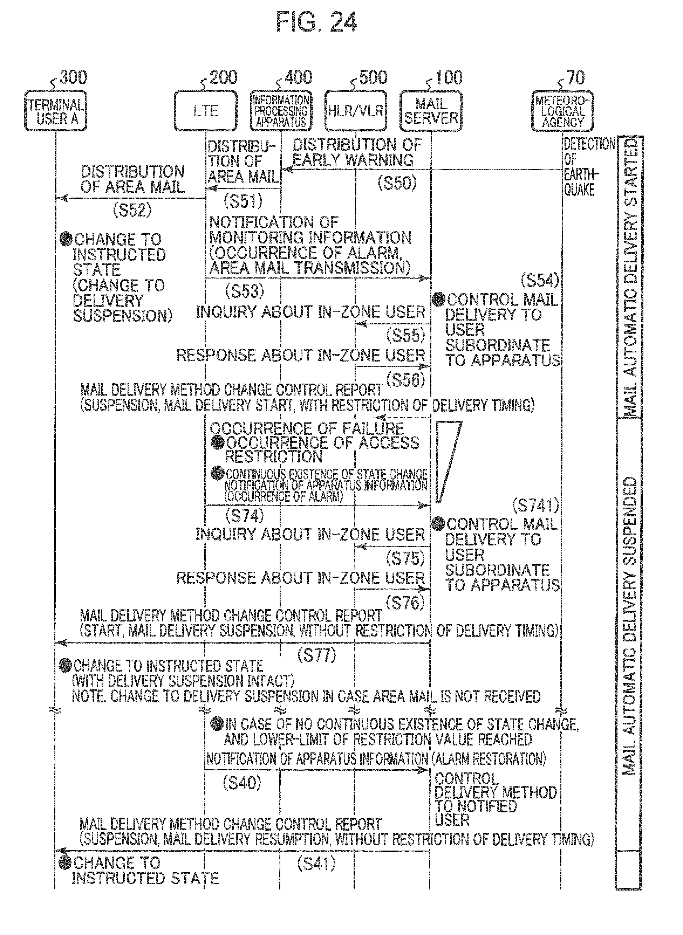

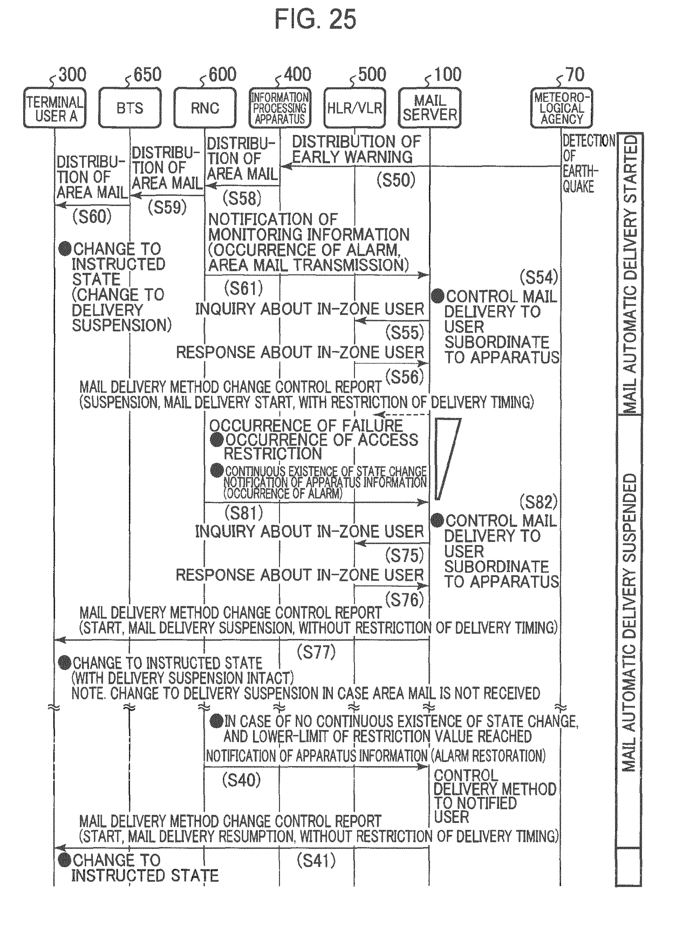

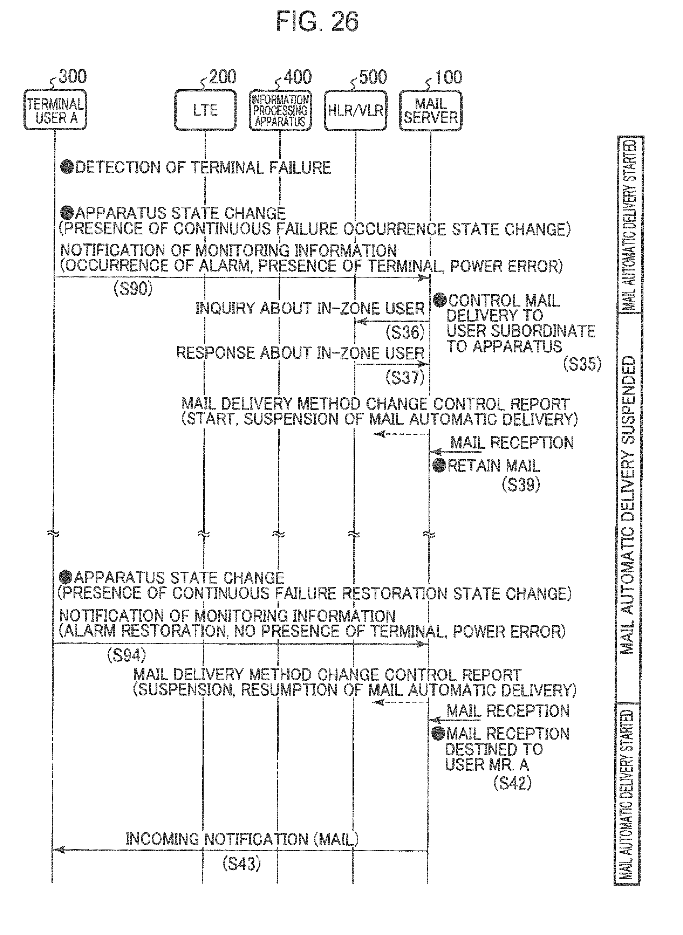

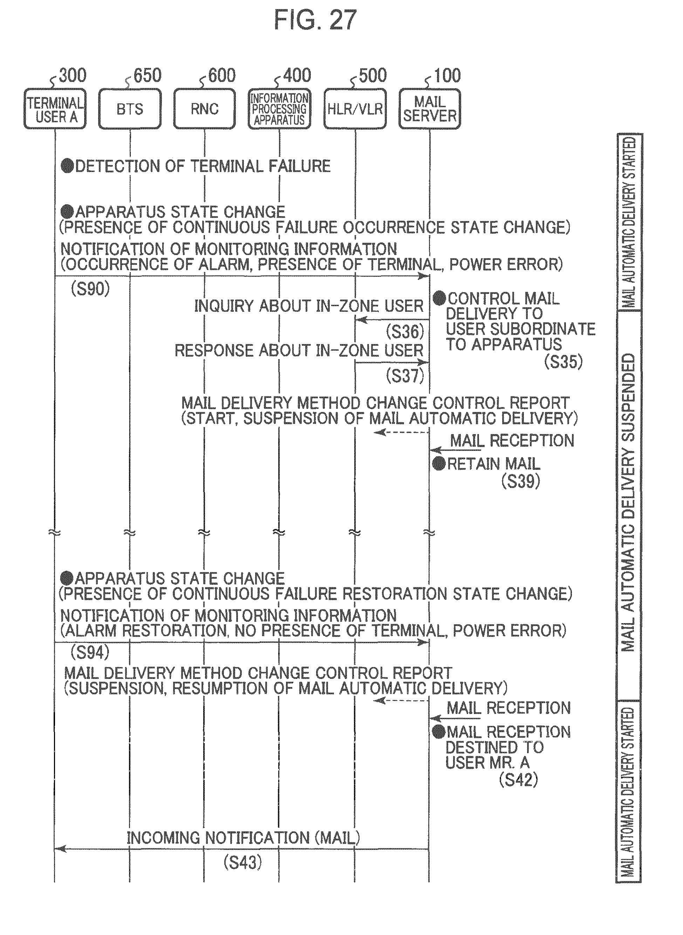

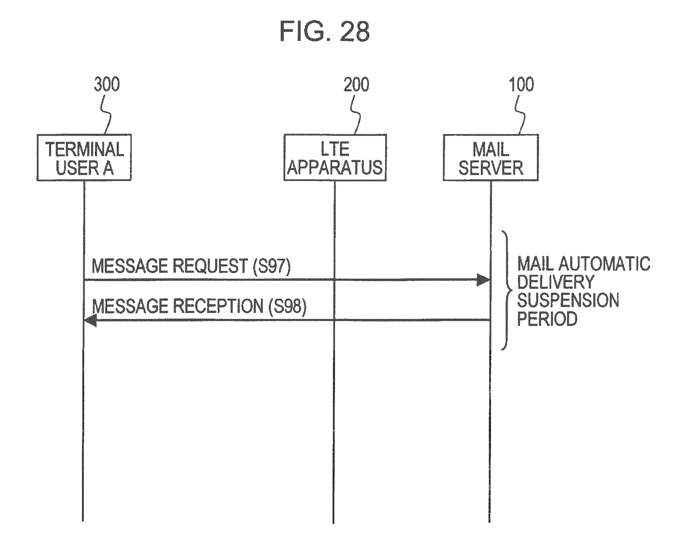

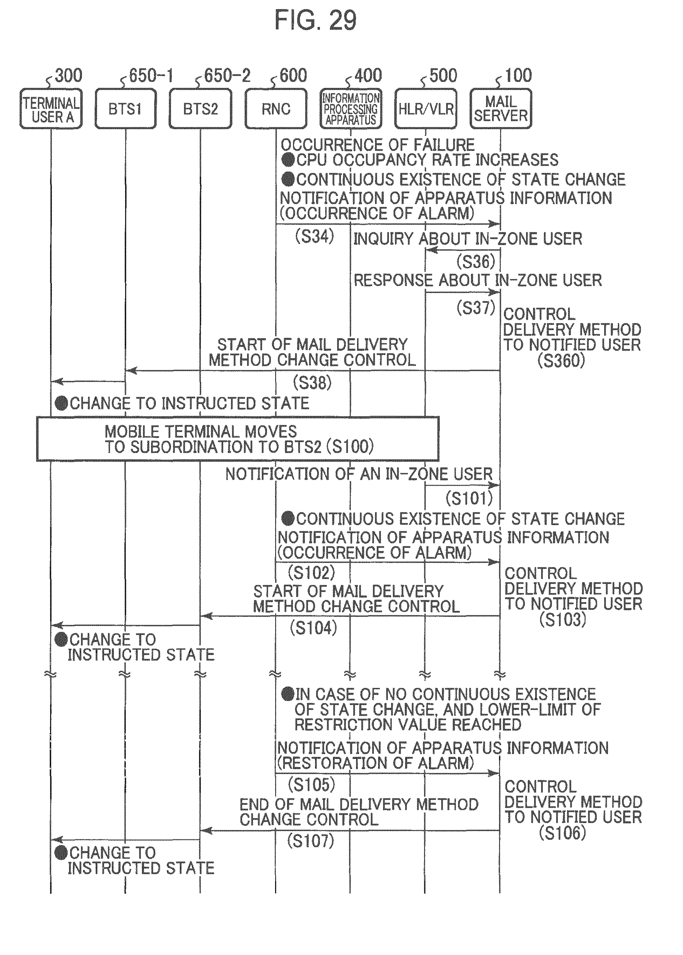

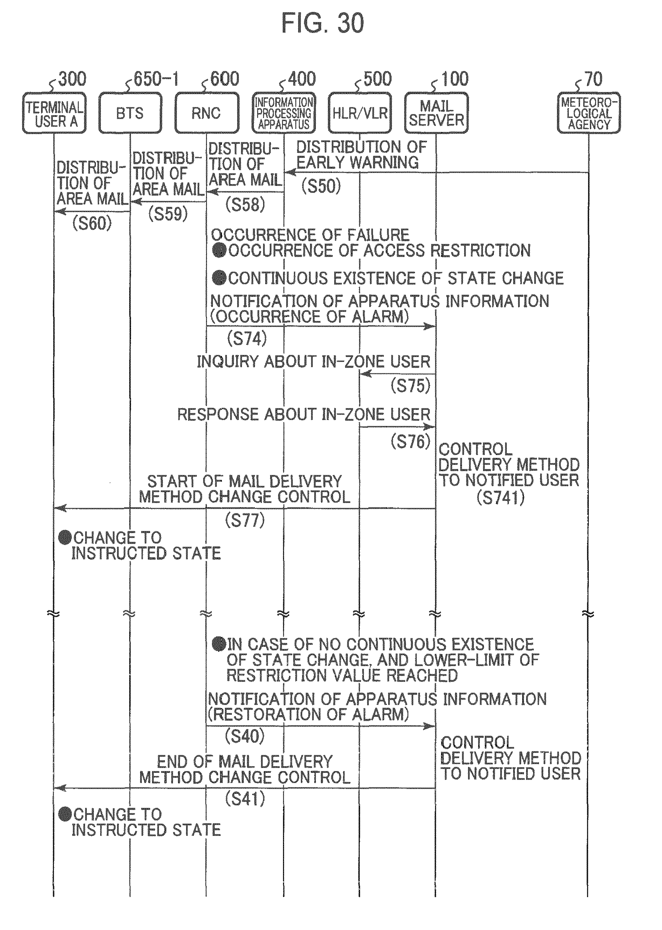

Next, sequence examples related to electronic mail delivery control will be described. FIGS. 20 through 30 are diagrams illustrating sequence examples related to delivery control. Among the figures illustrating sequence examples, FIGS. 20, 21 illustrate each case when congestion occurs, FIGS. 22, 22 illustrate each case when an early warning is distributed, FIGS. 24, 25 illustrate each case when congestion occurs after the early warning, and FIGS. 26, 27 illustrate each case of failure occurrence at the terminal 300, respectively. Further, FIG. 28 illustrates a sequence example when the delivery method is changed to the pull method, FIG. 29 illustrates a sequence example when the terminal 300 is handed over, and FIG. 30 illustrates another sequence example when congestion occurs after an early warning.

<3.1 Sequence example when congestion occurs>

FIG. 20 illustrates a sequence example when congestion occurs in the LTE-based mobile communication system 10.

The mail server 100 receives an electronic mail destined to a user A (or terminal 300) (S30). The electronic mail is transmitted from a PC 810 in another provider network 80.

Next, the mail server 100 transmits to the HLR/VLR 500 a notification concerning an inquiry about user information in regard to the received electronic mail (S31). It may also be possible for the mail server 100 to inquire the user information by including in the notification the destination information of the received electronic mail, for example.

Next, the HLR/VLR 500 replies with user information to the notification concerning inquiry about the user information (S32). For example, the HLR/VLR 500 replies with the user (or terminal 300) identification information and the user information corresponding to the destination information of the electronic mail, as user information.

Next, based on the acquired user identification information and the position information, the mail server 100 transmits an incoming notification of the electronic mail to the user A (or terminal 300) (S33). For example, the mail central control unit 102 generates an incoming notification including the user identification information, to transmit toward the terminal 300 on the basis of the position information. The incoming notification is transmitted to the terminal 300 through the LTE apparatus 200 (hereafter, the LTE apparatuses 200-1 to 200-4 may be referred to as LTE apparatus 200, unless otherwise stated).

After sending the incoming notification, the mail server 100 automatically delivers the mail. The terminal 300, on receiving the incoming notification, receives the automatically delivered mail, and on completing the reception, the terminal 300 completes mail reception.

Next, on detection of an apparatus state change caused by failure occurrence in the LTE apparatus 200, the LTE apparatus 200 generates monitoring information to notify the mail server 100 (S34). For example, the LTE apparatus 200 generates monitoring information including the identification information of the own station on which the failure occurs (for example, FIG. 15B), to transmit to the mail server 100.

The mail server 100, on receiving the monitoring information, determines to suspend mail automatic delivery to the user A (or terminal 300) subordinate the LTE apparatus 200 (S35).

Next, the mail server 100 transmits a notification concerning inquiry about user information to the HLR/VLR 500 (S36). Although the inquiry itself is already performed in S31, there may be a case that the terminal 300 moves after S31, and therefore, the mail server 100 acquires the most up-to-date user information at this time point (S36).

Next, the HLR/VLR 500 returns user information in reply to the notification concerning the inquiry about user information (S32).

Next, based on the user information, the mail server 100 suspends mail automatic delivery, and transmits the mail delivery method change control report toward the terminal 300 (S38).

The mail delivery method change control report includes an indication of starting to suspend automatic delivery of electronic mail, the identification number of the LTE apparatus 200-1 of a control target, the identification number of the target terminal 300 (for example, FIG. 18A).

For example, the mail delivery method change control report including the above information is generated in the mail delivery control unit 103. It may also be possible for the mail server 100 to suspend automatic delivery to all terminals 300 located in a zone subordinate to the LTE apparatus 200. In this case, it may be possible to target all subordinate users by setting a blank into the column of the "Terminal number".

The mail server 100 does not execute automatic delivery if the mail is received while mail automatic delivery is suspended (S39). For example, when the mail delivery control unit 103 determines to suspend automatic delivery, if a mail destined to the user A is received in the reception unit 101, the mail delivery control unit 103 controls not to transmit the mail from the transmission unit 110 to the subordinate LTE apparatus 200. In this case, the received mail is retained in an internal memory etc. of the reception unit 101.

Thereafter, when the apparatus state of the LTE apparatus 200 is changed by failure restoration, the LTE apparatus 200 sends the notification of monitoring information concerning failure restoration (S40). For example, when the apparatus monitoring unit 203 detects that the entire or a portion of the CPU occupancy rate, the traffic amount and the system restriction rate range within the upper-limit value and the lower-limit value that are defined to be limit values, the apparatus monitoring unit 203 can discriminate that the apparatus state is changed to failure restoration.

The mail server 100, on receiving the monitoring information concerning the failure restoration, resumes automatic delivery of electronic mail, and transmits the mail delivery method change control report toward the terminal 300 (S41). The mail delivery method change control report in this case includes, for example, information representing the start of automatic delivery (for example, FIG. 18A), and is generated in the mail delivery control unit 103.

When the terminal 300 receives the mail delivery method change control report including information indicative of the resumption of automatic delivery (S41), the terminal 300 is changed to a state instructed in the mail delivery method change control report. In this case, for example, the mail reception mode management unit 305 in the terminal 300 controls the reception unit 301 to receive an electronic mail by automatic delivery reception.

After the processing of S41, the mail server 100 transmits the received electronic mail to the terminal 300 by automatic delivery. Also, for example, the mail server 100 transmits the electronic mail, which is retained during suspending automatic delivery, by automatic delivery.

Thus, the mail server 100, on receiving an electronic mail destined to the user A (S42), transmits an incoming notification to the terminal 300 (S43), and executes automatic delivery.

FIG. 21 illustrates a sequence example when congestion occurs in the 3G-based mobile communication system 10. As compared with the LTE-based mobile communication system 10, the substantially same sequence is given, excluding that an apparatus transmitting monitoring information is replaced from the LTE apparatus 200 to the RNCs 600-1 to 600-4 (hereafter, the RNCs 600-1 to 600-4 may be referred to as RNC 600 unless otherwise stated).

Namely, the RNC 600, on detection of an apparatus state change caused by failure occurrence in the RNC 600, generates the monitoring information concerning failure occurrence, to notify the mail server 100 (S34). Based on the monitoring information, the mail server 100 suspends automatic delivery of electronic mail (S38).

Also, on detecting that an apparatus state indication is changed from failure to restoration because of a change in the apparatus state, the RNC 600 generates the monitoring information concerning failure restoration, to notify the mail server 100 (S40). Based on the monitoring information, the mail server 100 resumes automatic delivery of electronic mail (S41).

As illustrated in FIGS. 21, 22, the mail server 100 monitors and controls the mail delivery route or the apparatus located on the delivery route, and on detecting a failure on the electronic mail delivery route or the apparatus located on the delivery route, suspends mail automatic delivery. Thus, because no mail is transmitted from the mail server 100, congestion caused by mail transmission from the mail server 100 does not occur. Accordingly, even on the occurrence of a failure in the present mobile communication system 10, it is possible to perform other communication such as Area Mail transmission and an emergency contact through a telephone call.

<3.2 Sequence examples when early warning is distributed>

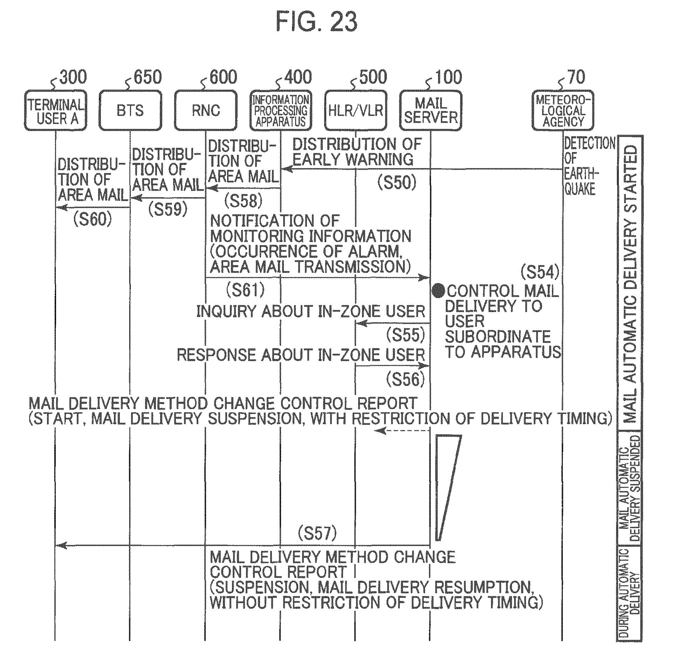

Next, sequence examples when an early warning is distributed will be described. FIG. 22 illustrates an example in the case of the LTE-based mobile communication system 10, and FIG. 23 illustrates an example in the case of the 3G-based mobile communication system 10.

The CBS/ETW 710 in the Meteorological Agency distributes the early warning when detecting an earthquake, a tsunami, etc. (S50). The early warning is transmitted to the information processing apparatus 400 through the SGN 350-1, for example.

The information processing apparatus 400, on receiving the early warning, distributes an Area Mail to the LTE apparatus 200 (S51). In the Area Mail, information such as the time and the location of occurrence and the scale of the earthquake and the tsunami is included.

The LTE apparatus 200, on receiving the Area Mail, transmits the Area Mail to subordinate terminals 300 (S52).

Also, on receiving the Area Mail, the LTE apparatus 200 generates monitoring information to notify the mobile communication system 10 thereof (S53). The monitoring information may include, for example, a message number (for example, "12" represents the transmission of Area Mail) that represents information indicating the Area Mail is transmitted, and also may include the identification number of the LTE apparatus 200 transmitting the Area Mail. By this monitoring information, for example, the mail server 100 can detect the distribution of the Area Mail (or the transmission of emergency information).

The mail server 100, on receiving the monitoring information, determines to perform automatic delivery control to each user (or terminal 300) subordinate to the LTE apparatus 200 (S54), and inquires user information of the user subordinate to the LTE apparatus 200. (S55). The mail server 100 may inquire user information of all users subordinate the LTE apparatus, for example.

On receiving the notification, the HLR/VLR 500 replies with user information in regard to the user subordinate to the LTE apparatus 200 (S56).

The mail server 100, on receiving the user information (S56), suspends automatic delivery of electronic mail. In this case, the mail server 100 does not transmit the mail delivery method change control report that includes the information of suspending automatic delivery of electronic mail. The reason is that the terminal 300, on receiving the Area Mail (S52), suspends the automatic reception of electronic mail, for example, and therefore, the transmission of the mail delivery method change control report becomes useless.

After the lapse of a certain time, if the mail server 100 does not receive the notification of failure occurrence from the LTE apparatus 200, the mail server 100 resumes suspended automatic delivery of electronic mail, and transmits the mail delivery method change control report that includes information indicating the resumption (S57).

Such resumption of automatic delivery is made when a failure does not occur in each apparatus subordinate to the mail server 100 (such as the LTE apparatus 200, the terminal 300, etc.) or a channel, if the early warning is distributed. In such a case, the mobile communication system 10 resumes automatic delivery for user convenience sake, without continuing the suspension of automatic delivery of electronic mail.

FIG. 23 illustrates a sequence example of the 3G-based mobile communication system 10. As compared with the case of the LTE-based mobile communication system 10 (for example, FIG. 22), there is substantially the same sequence, excluding that an apparatus that transmits the monitoring information is the RNC 600.

In this case, on receiving the distribution of an early warning (S50), the information processing apparatus 400 generates an Area Mail. The Area Mail is distributed to the terminal 300 through the subordinate RNC 600 and the BTS 650 (S58-S60). Then, the RNC 600, on receiving the Area Mail, notifies the mail server 100 of monitoring information concerning Area Mail transmission (S61). On receiving the monitoring information, the mail server 100 confirms an in-zone user (S56, S57), and thereafter, suspends automatic delivery of electronic mail, and after the lapse of a certain time, the mail server 100 resumes automatic delivery (S57).

In the sequence examples of FIGS. 22, 23, the mail server 100, on receiving the monitoring information by the distribution of the early warning, suspends mail automatic delivery for a certain period, and is configured to resume automatic delivery if the monitoring information concerning failure occurrence is not received in the above period.

Thus, the mail server 100 suspends mail automatic delivery before the occurrence of a failure, and therefore, the occurrence of congestion caused by mail transmission from the mail server 100 can be prevented. By this, in the mobile communication system 10, it is possible to perform other communication such as an emergency contact, safety confirmation, etc. through a telephone call even in the event of a disaster, for example.

<3.3 Sequence examples when failure occurs after early warning is distributed>

Next, sequence examples when a failure occurs after an early warning is distributed will be described. FIG. 24 illustrates an example in the case of the LTE-based mobile communication system 10, and FIG. 25 illustrates an example in the case of the 3G-based mobile communication system 10.

As illustrated in FIG. 24, a sequence from the distribution of the early warning to the suspension of mail automatic delivery (from S50 to S56) is similar to the example illustrated in FIG. 22.

Next, when a failure occurs in the LTE apparatus 200, the LTE apparatus 200 generates the monitoring information concerning failure occurrence, to notify the mail server 100 (S74). For example, there occurs a failure related to access restriction.

The mail server 100, on receiving the monitoring information, continues suspending automatic delivery (S741). Next, the mail server 100 confirms the most up-to-date user information subordinate to the LTE apparatus 200 (S75, S76), to transmit the mail delivery method change control report to the user (or terminal 300)(S77).

According to the present example, when the mail server 100 suspends automatic delivery of electronic mail, the mail server 100 does not transmit the mail delivery method change control report, and instead, transmits the mail delivery method change control report after the occurrence of the failure (S74, S77). The mail server 100 can report to the terminal 300 that mail automatic delivery is suspended because of failure occurrence, for example.

Thereafter, the similar processing to the sequence in the case of failure occurrence (for example, FIG. 20) is performed (S40, S41).

FIG. 25 illustrates a sequence example when a failure occurs after an early warning is distributed in the 3G-based mobile communication system 10. As compared with the case of the LTE-based mobile communication system 10 (for example, FIG. 24), there is substantially the same sequence, excluding that an apparatus that transmits the monitoring information is the RNC 600.

In the example illustrated in FIG. 25 also, after the distribution of the early warning, when an apparatus state is changed by the occurrence of a failure in the RNC 600 (or in an apparatus such as the BTS 650 subordinate to the RNC 600 or a channel therebetween) because of a disaster etc., the RNC 600 generates monitoring information to transmit to the mail server 100 (S81). By the reception of the monitoring information, the mail server 100 continues suspending automatic delivery of electronic mail (S82), and transmits the mail delivery method change control report (S77). Thereafter, processing is executed similarly to the sequence example in the case of failure occurrence (for example, FIG. 21).

According to the sequence examples illustrated in FIGS. 24, 25, on receiving the monitoring information by the distribution of the early warning, the mail server 100 suspends mail automatic delivery for a certain period (S54). Then, on receiving the monitoring information concerning failure occurrence during the above period (S74, S81), the mail server 100 is configured to continue the suspension of automatic delivery (S741, S82).

Thus, the mail server 100 suspends mail automatic delivery before the occurrence of a failure, and therefore, it is possible to prevent the occurrence of congestion caused by mail transmission from the mail server 100. Further, because the mail server 100 continues suspending mail automatic delivery if a failure occurs, in the mobile communication system 10, it is possible to perform other communication such as an emergency contact, safety confirmation, etc. through a telephone call, even on the occurrence of a failure caused by a disaster, for example.

<3.4 Sequence examples when notification of monitoring information is made from terminal>

Next, a description will be given on a case when the terminal 300 detects a failure in the own station and transmits the monitoring information. FIG. 26 illustrates an example of the LTE-based mobile communication system 10, and FIG. 27 illustrates an example of the 3G-based mobile communication system 10, respectively.

As illustrated in FIG. 26, the terminal 300, on detection of the own failure and an apparatus state change, generates the monitoring information to transmit toward the mail server 100 (S90).

For example, similar to the case of the LTE apparatus 200, the terminal monitoring unit 304 monitors the reception unit 301, the transmission unit 310, etc., and calculates a system restriction rate, a CPU occupancy rate, ad traffic amount, etc. to compare with each limit value of system data received or retained in advance, so that the terminal monitoring unit 304 can detect an apparatus state change. In this case, the terminal monitoring unit 304 generates monitoring information including the identification number of the own terminal 300, for example.

The mail server 100, on receiving the monitoring information transmitted from the terminal 300 (S90), determines to suspend mail automatic delivery to the user A, and suspends automatic delivery (S35). In this case, although the mail server 100 confirms the position information etc. of the user A (S36, S37), the mail server 100 does not transmit the mail delivery method change control report including that automatic delivery is suspended to the user A. The reason is that the terminal 300 is expected to be incapable of receiving the mail delivery method change control report because of the failure.

While automatic delivery of electronic mail is suspended, the mail server 100 retains each electronic mail destined to the user A in an internal memory etc., without performing automatic transmission (S39).

Thereafter, the terminal 300, when the apparatus state is changed because of restoration from the failure, generates the monitoring information including the information to that effect, to transmit toward the mail server 100 (S94).

On receiving the monitoring information, the mail server 100 resumes automatic delivery of electronic mail. Thereafter, on receiving a mail destined to the user A, the mail server 100 transmits an incoming notification to the terminal 300 (S42, S43).

FIG. 27 illustrates a sequence example in the mobile communication system 10 when the terminal 300 detects a failure in the own station and transmits monitoring information. Operation is made in a similar manner to the example of the LTE-based mobile communication system (for example, FIG. 26), excluding that the monitoring information (S90, S94) transmitted from the terminal 300 is transmitted to the mail server 100 through the BTS 650 and the RNC 600.

In the examples illustrated in FIGS. 26, 27, the mail server 100 suspends mail automatic delivery, on receiving monitoring information concerning failure occurrence from the terminal 300 (S90, S35). Therefore, in the present mobile communication system 10, when a failure occurs in the terminal 300, each mail destined to the terminal 300 is not transmitted, and accordingly, it is possible to prevent the occurrence of congestion caused by the mail. Also, in the mobile communication system 10, because congestion is prevented, it is possible to perform other communication such as a telephone call for an emergency contact.

<3.5 Electronic mail delivery by pull method>

In the above-mentioned <2. Control executed during suspension of automatic delivery>, a description is given on a point that the mail server 100 performs division transmission of an electronic mail and transmission at transmission timing (transmission intervals) even during suspending automatic delivery of electronic mail. Hereafter, a description will be given on an example of changing a delivery method to a pull method during suspending mail automatic delivery.

FIG. 28 is a diagram illustrating an example of electronic mail delivery by the pull method. FIG. 28 illustrates a sequence example after the suspension of automatic delivery, for example.

The pull method is a delivery method in which, in response to a request from the terminal 300, the mail server 100 delivers a received electronic mail to the terminal 300. In the example of FIG. 28 also, the terminal 300 transmits a message request to the mail server 100 (S97), to confirm whether there is a newly received electronic mail. The mail server 100, on receiving an electronic mail destined to the user A, transmits the electronic mail in response to the message request (S98), and the terminal 300 performs the reception thereof.

The pull method may be applicable, for example, by combining with division transmission, delivery sequence change, etc. described in <2. Control executed during suspension of automatic delivery>.

<3.6 Sequence example when the terminal is handed over>

Next, a description will be given on an operation example when the terminal 300 is handed over after mail automatic delivery is suspended. FIG. 29 illustrates a sequence example in the above case, and represents an example in the case of the 3G-based mobile communication system 10.

The mail server 100 receives the monitoring information concerning failure occurrence (S34), and after confirming an in-zone user (S36, S37), suspends mail automatic delivery to the user A (or terminal 300) from which the monitoring information is reported (S360). Then, the mail server 100 transmits the mail delivery method change control report to the BTS 650-1 to which the terminal 300 is connected (S38).

Thereafter, the terminal 300 performs a handover and changes a connecting base station from the BTS 650-1 to the BTS 650-2 (S100).

After the handover, the HLR/VLR 500 notifies the mail server 100 of the user information after the change (S101). When the position information etc. of the user (or terminal 300) is changed by the handover, the HLR/VLR 500 receives the position information after the change from the RNC 600 etc., and with this reception as a trigger, the HLR/VLR 500 can report the user information after the change.

Next, the mail server 100 receives again the monitoring information caused by failure occurrence from the RNC 600 (S102), determines to suspend automatic delivery of electronic mail to the user A (or terminal 300) (S103), and transmits mail delivery method change control report (S104). In this case, because the mail server 100 is already suspended automatic delivery to the user A before the handover, the mail server 100 continues the above state even after the handover.

Thereafter, on receiving from the mail server 100 the monitoring information concerning failure restoration (S105), the mail server 100 resumes mail automatic delivery to the user A (S106), and transmits toward the terminal 300 the mail delivery method change control report including information to that effect (S107).

Although a sequence example in the LTE-based mobile communication system 10 is not illustrated, it is possible to execute similarly to the case of the 3G-based mobile communication system 10 (for example, FIG. 29) if the LTE apparatus 200 reports the monitoring information (S34, S102, S105).

Also in the case of the handover of the terminal 300, the mail server 100 is configured to continue the suspension of mail automatic delivery if there is a continuing apparatus state change because of failure occurrence. Thus, in the present mobile communication system 10, because each mail is not transmitted from the mail server 100 if a failure occurs, the occurrence of congestion caused by the mail can be prevented, so that other communication such as a telephone call can be performed.

<3.7 Other sequence examples>

In the aforementioned <3.3>, a description is given on the sequence example when a failure occurs after the distribution of an early warning. In the present example, a description will be given on an example that there is no monitoring information concerning Area Mail distribution is reported, and the mail server 100 suspends mail automatic delivery by the monitoring information concerning failure occurrence.

FIG. 30 illustrates a sequence example, which represents an example in the case of the 3G-based mobile communication system 10.

The RNC 600 does not transmit the monitoring information concerning Area Mail distribution if the RNC 600 receives a distributed Area Mail. On detecting an apparatus state change caused by failure occurrence, the RNC 600 generates the monitoring information to notify the mail server 100 (S74).

The mail server 100 confirms an in-zone user (S75, S76), suspends mail automatic delivery to the user A (or terminal 300) (S741), and transmits the mail delivery method change control report including information to that effect (S77). Thereafter, the mail server 100 is operated similarly to the sequence example illustrated in FIG. 25.

In the present example, the mail server 100 can suspend automatic delivery by receiving the monitoring information concerning failure, without receiving the monitoring information concerning Area Mail distribution (S74, S741), and thus, the occurrence of congestion can be prevented, so that communication can be performed.

<3.8 Operation examples related to inquiry about in-zone user>

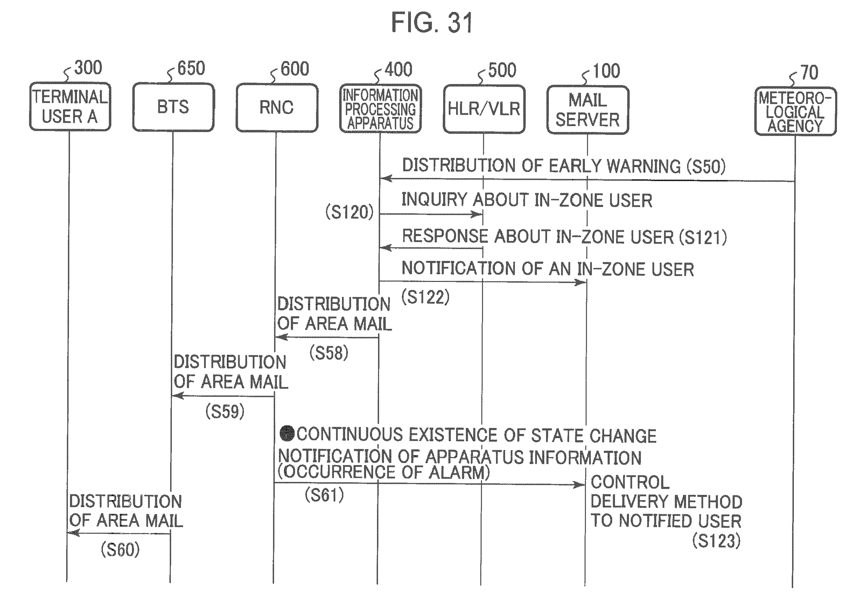

Next, a description will be given on a variety of operation examples related to an inquiry about an in-zone user. FIGS. 31 through 36 illustrate sequence diagrams representing the operation examples.

Among the figures, FIG. 31 illustrates an example in which the information processing apparatus 400 makes an inquiry about an in-zone user. The information processing apparatus 400, on receiving an early warning (S50), inquires about the identification information, the position information, etc. of all users located in a zone subordinate to the RNC 600 (S120).

The HLR/VLR 500, on receiving this notification, returns to the RNC 600 user information of all users located in the zone subordinate (S121).

The mail server 100 can suspend mail automatic delivery on the basis of the user information received from the information processing apparatus 400, for example (S123).

In the present example, because the mail server 100 does not execute confirmation of an in-zone user from the HLR/VLR 500, processing in the mail server 100 can be reduced also, for example.

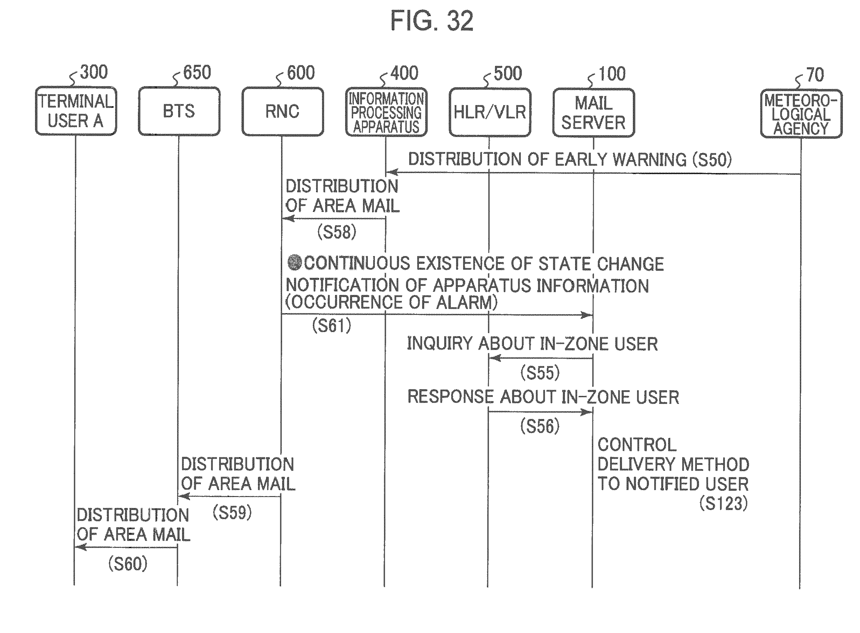

FIG. 32 illustrates an example in which the mail server 100 inquires of the HLR/VLR 500 about an in-zone user (S55, S56), which is substantially the same as the example having been described before, such as FIG. 23.

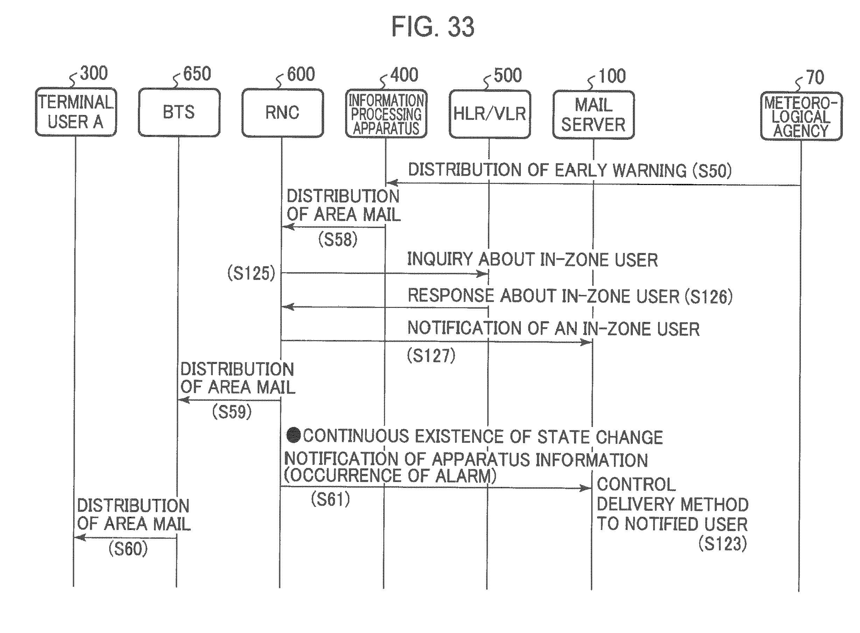

FIG. 33 is an example in which the RNC 600 makes an inquiry about an in-zone user. Namely, the RNC 600, on receiving the distribution of an Area Mail (S58), inquires about the user information of a user located in the zone subordinate to the RNC 600 (S125). Then, on receiving the user information from the HLR/VLR 500, the RNC 600 notifies the mail server 100 of the user information (S127).

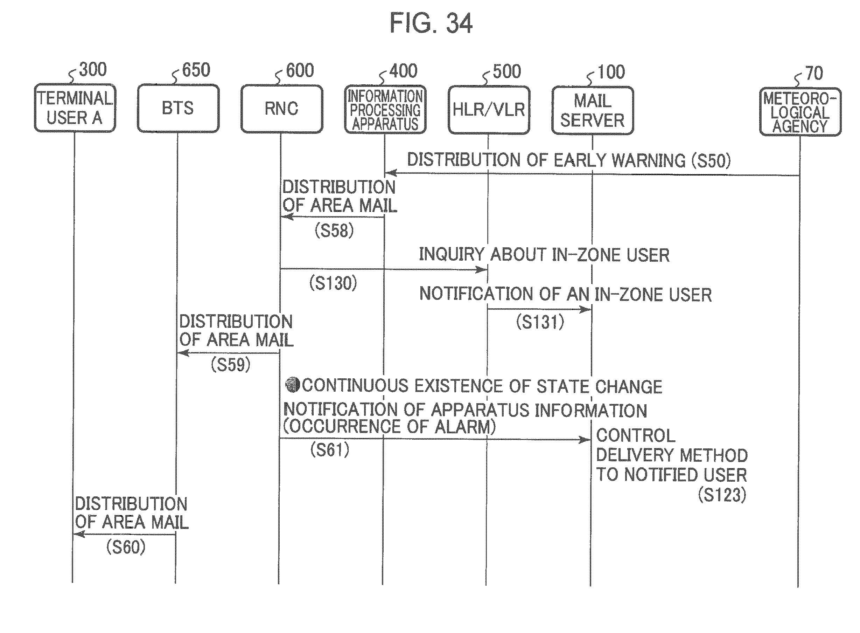

FIG. 34 is an example in which the RNC 600 makes an inquiry about an in-zone user, and the HLR/VLR 500 notifies the mail server 100 of user information (S130, S131). In this case, at the inquiry of the in-zone user, the RNC 600 may instruct the HLR/VLR 500 to transmit the result thereof to the mail server 100.

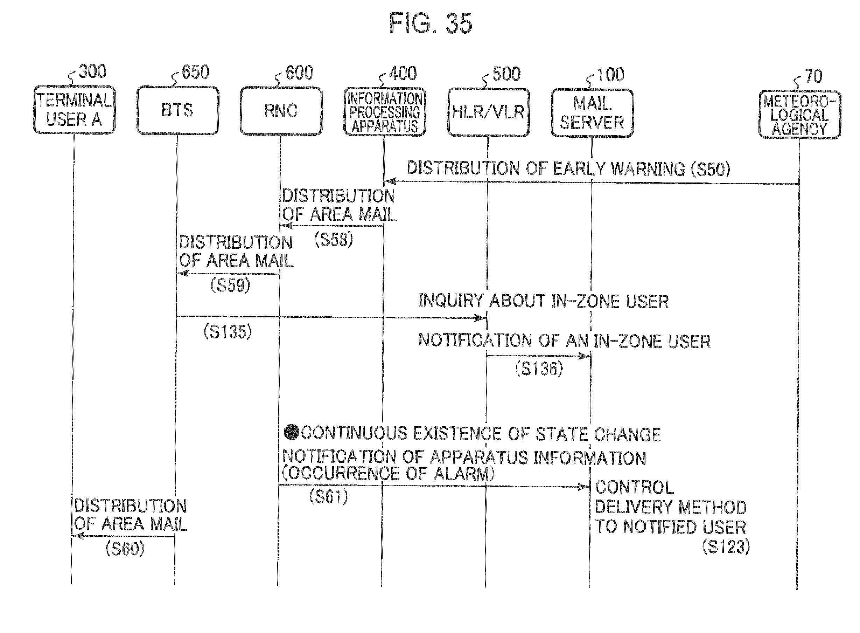

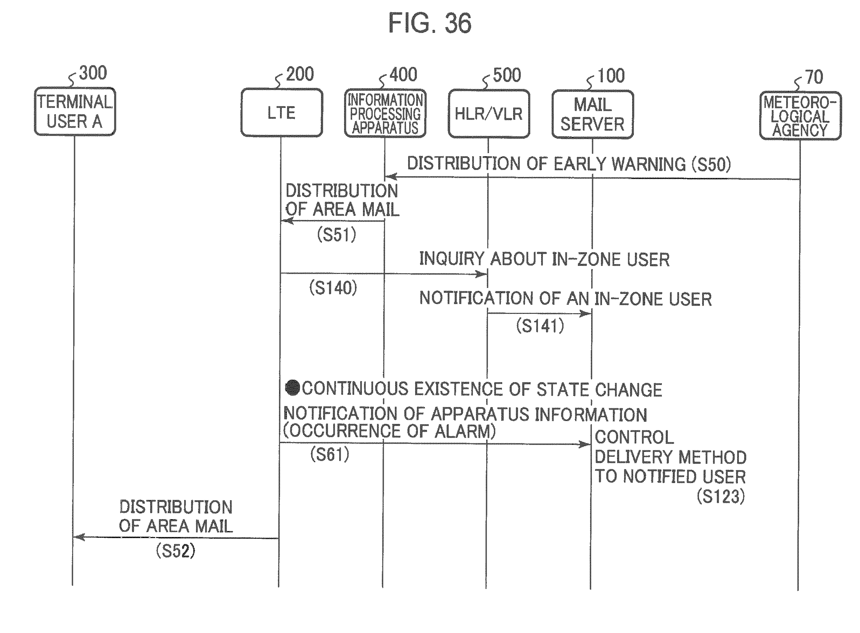

FIG. 35 is an example in which the BTS 650 makes an inquiry about an in-zone user (S135), and FIG. 36 is an example in which the LTE apparatus 200 makes an inquiry about an in-zone user (S140). In both cases, in response to the inquiry about the in-zone user, the HLR/VLR 500 notifies the mail server 100 of the result thereof (S136, S141).

As such, in the present examples, each inquiry about an in-zone user is made by an apparatus other than the mail server 100, and therefore, processing in the mail server 100 can be reduced.

<3.9 Other sequence examples at early warning>

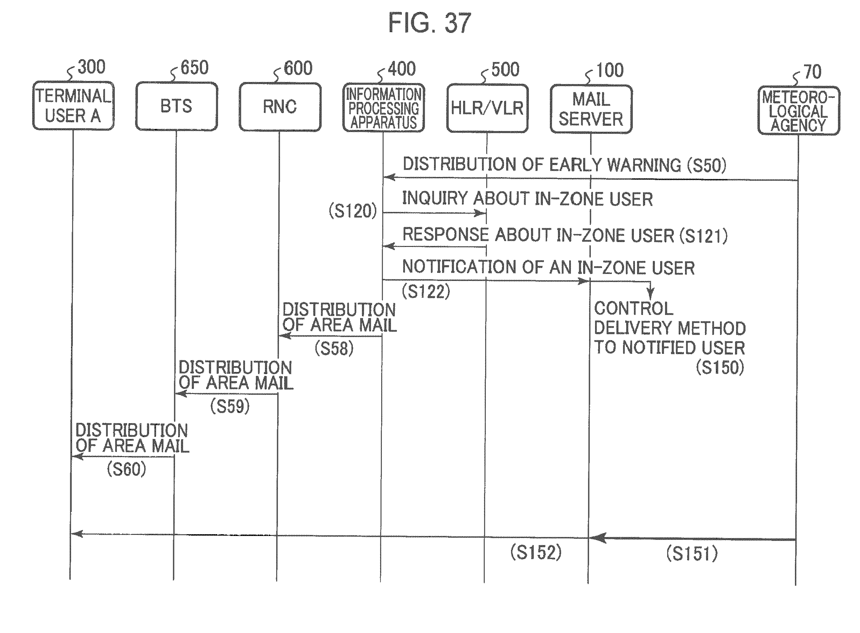

Next, a description will be given on other sequence examples at an early warning. FIGS. 37 through 39 illustrate the sequence examples. In any example depicted in FIGS. 37 through 39, there is illustrated an example in which the mail server 100 does not transmit the delivery method change control report including information indicating that automatic delivery is suspended.

In the example of FIG. 37, the information processing apparatus 400, on receiving an early warning (S50), confirms an in-zone user (S120, S121), to notify the mail server 100 of the user information of the in-zone user (S122).

On receiving this notification, the mail server 100 changes the delivery method, and then transmits an electronic mail destined to the user (S150). In the example of FIG. 37, there is illustrated an example of limiting a mail delivery size (S151, S152). As is described in the aforementioned <2. Control executed during suspension of automatic delivery>, limitation of the delivery size is performed by that the mail server 100 calculates a transmittable data count etc. using expressions (1) and (2) to transmit electronic mails on the basis of the calculated transmittable data count.

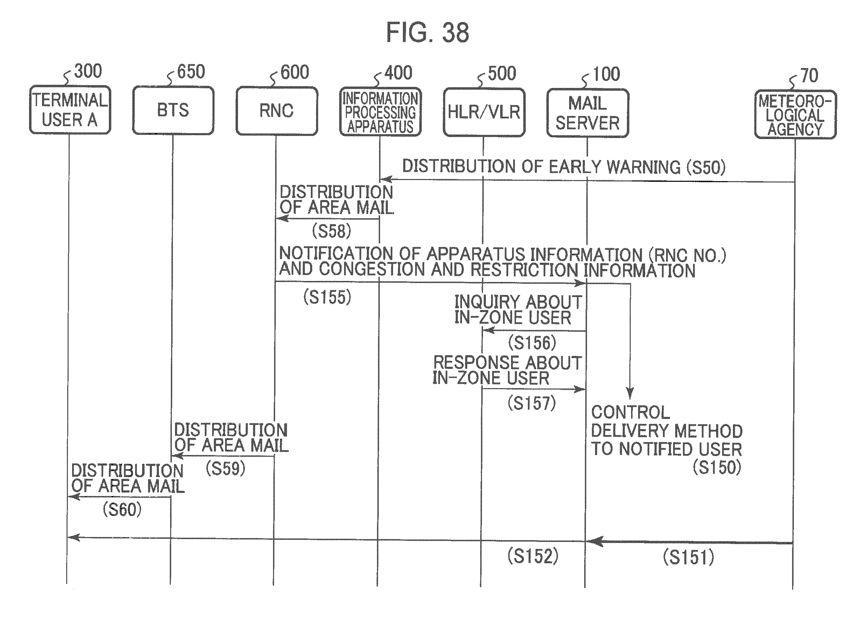

In the example of FIG. 38, when the RNC 600 receives a distributed Area Mail (S58), the RNC 600 sends a notification of monitoring information including apparatus information, congestion information and restriction information (S155), and then the mail server 100, on receiving the notification, changes the electronic mail delivery method (S150). After the reception of the notification, when the mail server 100 receives an electronic mail destined to the user, for example, the mail server 100 delivers the electronic mail with the delivery method after the change. Also, in the example of FIG. 38, there is illustrated an example in which the delivery method after the change limits the delivery size (S151, S152).

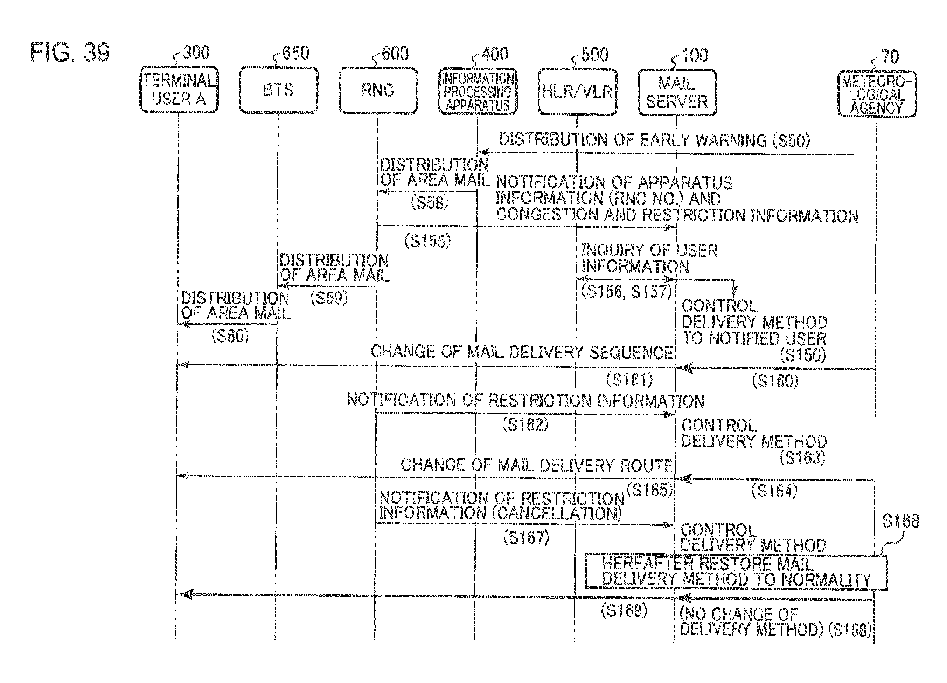

In the example of FIG. 39, similar to FIG. 38, when the RNC 600 receives an Area Mail (S58), the RNC 600 notifies the mail server 100 of the monitoring information including apparatus information, congestion information and restriction information (S155).

When the mail server 100, on receiving the above notification, confirms a user subordinate to the RNC 600 (S156, S157) for example, the mail server 100 changes the delivery method of a mail destined to the user (S150).

For example, as is described in the aforementioned <2. Control executed during suspension of automatic delivery>, the mail server 100 calculates a transmittable data count, and based on the transmittable data count, changes the electronic mail delivery sequence, delivery route, etc.

In the example of FIG. 39, the mail server 100 changes the mail delivery sequence and transmits the mail to the user A (S160, S161). For example, the mail server 100 transmits each data packet in order from the smallest packet size to the largest, not in order of arrival (S160, S161).

Thereafter, when there is a change in the system restriction rate, etc. caused by a newly calculated system restriction rate, the changed mail delivery sequence, etc., the RNC 600 generates restriction information, to notify the mail server 100 (S162). The RNC 600 may generate and send the notification of the monitoring information including restriction information, for example.

The mail server 100, on receiving the notification of the restriction information, changes the electronic mail delivery route, to transmit the electronic mail with the route after the change (S164, S165).

When the restriction is canceled, the RNC 600 generates restriction information indicative of the cancellation of restriction, to notify the mail server 100 (S167). For example, the in-apparatus restriction monitoring unit 206 or the apparatus monitoring unit 203 detects whether or not the restriction is canceled, and the apparatus monitoring unit 203 generates the restriction information.

On receiving the restriction information, the mail server 100 changes the delivery method to automatic delivery (S168). After changing to automatic delivery, the mail server 100 transmits an electronic mail to the terminal 300 by automatic delivery (S168, S169).

Here, in regard to the notification of the restriction information (S162, S167), the notification of monitoring information including restriction information may be applicable.

Although each description is given on FIGS. 37 through 39 by taking the 3G-based mobile communication system 10 as an example, similar implementation to the LTE-based mobile communication system 10 may also be possible. In this case, using the LTE apparatus 200 in place of the RNC 600, the LTE apparatus 200 generates and sends the monitoring information.

In the examples of FIGS. 37 through 39 also, the mail server 100, on receiving the monitoring information concerning failure occurrence, suspends automatic delivery of the mail (S155, S150). Therefore, in the mobile communication system 10, the occurrence of congestion caused by the mail can be prevented, so that other communication can be performed. Also, in the examples illustrated in FIGS. 37 through 39, the mail server 100 does not transmit the mail delivery method change control report including information indicative of the suspension of automatic delivery, and therefore, processing can be reduced.

<3.10 Notification sequence of apparatus information and restriction information>

In the aforementioned <3.9 Other sequence examples at early warning>, the description is given on the example in which the RNC 600 sends the notification of monitoring information including apparatus information and restriction information (for example, S155 in FIGS. 38, 39). In the present example, a description will be given on the notification of the apparatus information and the restriction information.

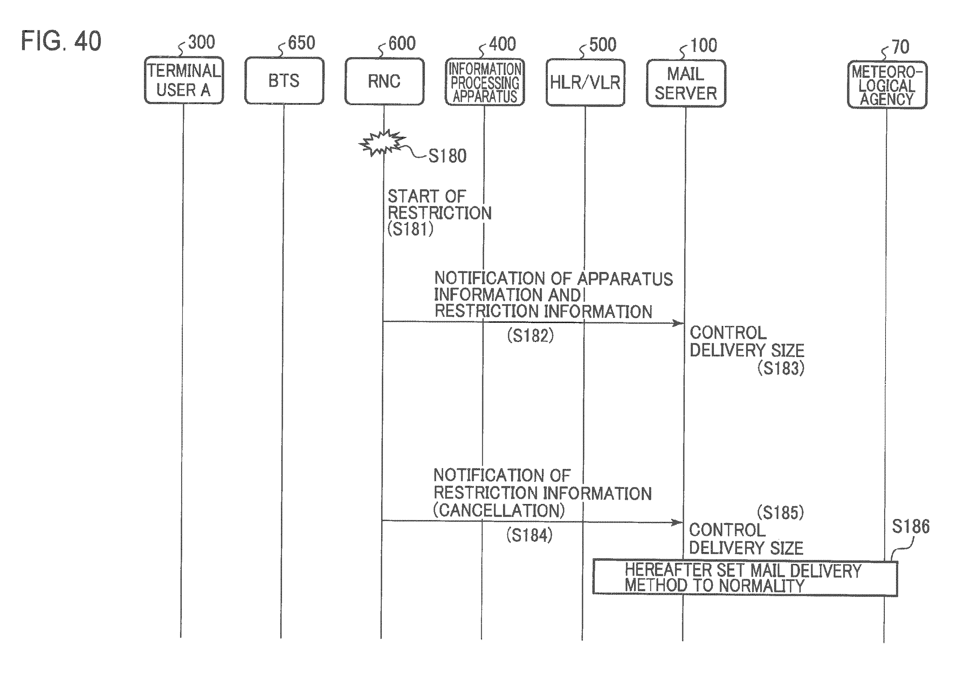

FIG. 40 illustrates an example in which the apparatus information and the restriction information are transmitted from the RNC 600. On the occurrence of a failure etc. in the RNC 600 (S180), the RNC 600 starts restriction (S181) and notifies the mail server 100 of the apparatus information and the restriction information (S182). For example, the restriction information includes "System restriction rate", "CPU occupancy rate", "Traffic amount", etc., and each value of "System restriction rate" etc. including a certain value or higher is transmitted as restriction information (for example, FIG. 15A).

The mail server 10, on receiving the apparatus information and the restriction information, changes the mail delivery method (S183). In the example of FIG. 40, the delivery size is changed. In this case, it may be possible for the mail server 100 to suspend automatic delivery of the mail.

Thereafter, when the restriction is canceled, the RNC 600 notifies the mail server 100 of restriction information including the information indicative of the cancellation of restriction (S184). For example, the RNC 600 transmits each value of "System restriction rate" etc. including a certain value or lower, as restriction information, and the mail server 100 compares the above each value with each restriction value included in system data, so that the mail server 100 can confirm the cancellation of restriction. Alternatively, it may also be possible for the RNC 600 to generate and transmit restriction information including information of either the start of restriction or the cancellation of restriction. Such restriction information is generated in the apparatus monitoring unit 203, for example.

The mail server 100, on receiving the restriction information concerning restriction cancellation, changes the electronic mail delivery method to the automatic delivery method (S185), and thereafter, transmits an electronic mail destined to the user A (or terminal 300) by automatic delivery (S186).

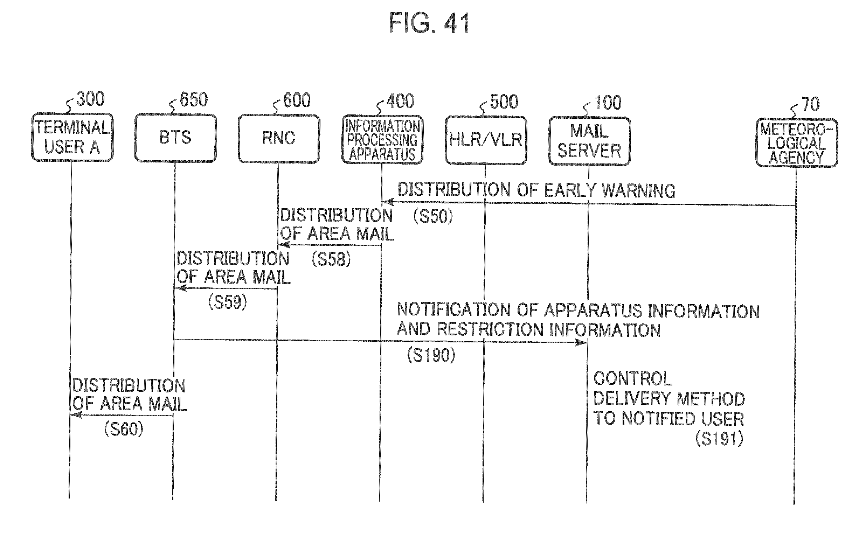

FIG. 41 illustrates an example of a case in which the BTS 650 sends the notification of apparatus information and restriction information. The BTS 650, on receiving a distributed Area Mail (S59), generates apparatus information and restriction information, to notify the mail server 100 (S190). On receipt thereof, the mail server 100 suspends mail automatic delivery or changes to another delivery method (S191).

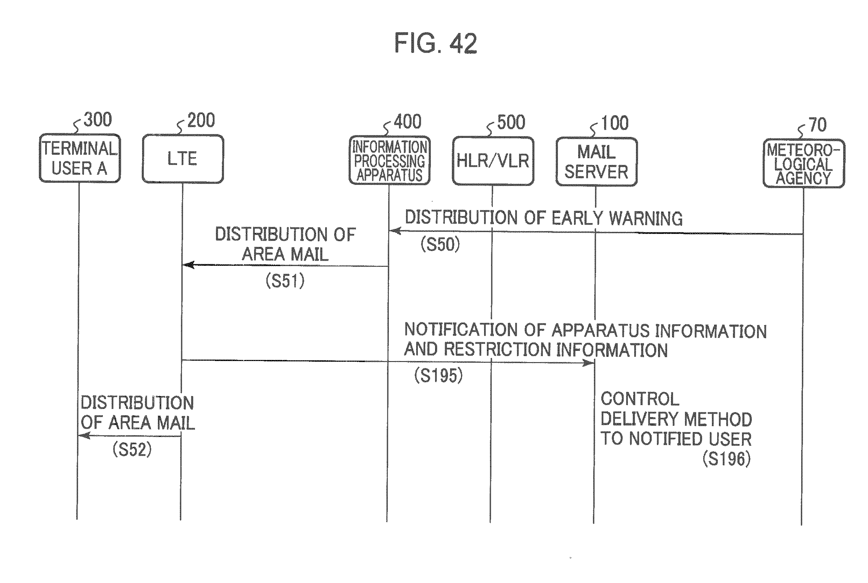

FIG. 42 illustrates an example of a case in which the LTE apparatus 200 sends the notification of apparatus information and restriction information. The LTE apparatus 200, on receiving a distributed Area Mail (S51), suspends mail automatic delivery or changes the delivery method from automatic delivery to the other method (S196).

<4. Other operation examples>

In regard to the above-mentioned operation examples, the description is given on the case in which the apparatus state change caused by the occurrence of a failure is detected on another apparatus than the mail server 100 and a channel on the electronic mail delivery route. For example, in regard to the location of failure occurrence, for example, there may be a case of occurrence in the mail server 100. By detecting an apparatus state change caused by failure occurrence in the own station, the mail server 100 can suspend or change mail automatic delivery, for example.

For example, the own node monitor control unit 108 monitors the reception unit 101 and the transmission unit 110, and calculates a congestion rate, a traffic amount, a CPU occupancy rate, etc. on the basis of the data amount of transmission and reception data, the operation of each control unit 102, etc. By comparing with each limit value included in the system data, the own node monitor control unit 108 can detect the existence or non-existence of an apparatus state change, similarly to the apparatus monitoring unit 203 in the subordinate node monitoring unit 220 (for example, S21 in FIG. 14). It may also be possible for the mail delivery control unit 103 to receive the detection result of the existence or non-existence of the apparatus state change from the own node monitor control unit 108 and perform processing in a similar manner to the monitoring information etc., so as to suspend or resume mail automatic delivery according to the existence or non-existence of the apparatus state change, for example.

In regard to the aforementioned operation examples, the description is given based on that the mail server 100 is a mail server in the mobile communication system 10. The aforementioned operation examples may also be applicable to a mail server 100 in another communication system than the mobile communication system 10, if the mail server 100 performs mail automatic delivery, for example.

<Other configuration examples of mail server control unit, subordinate node monitoring unit, and mail transceiver unit>

Next, other configuration examples of the mail server control unit 120, the subordinate node monitoring unit 220 and the mail transceiver unit 320 will be described.

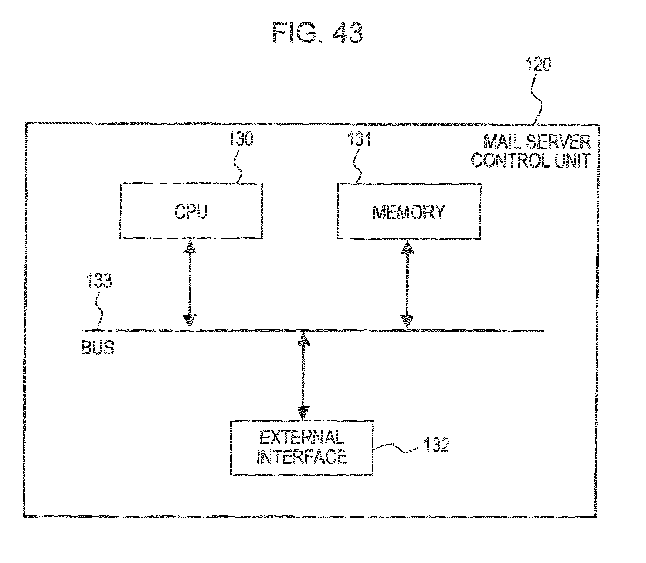

FIG. 43 is a diagram illustrating other configuration examples of the mail server control unit 120. The mail server control unit 120 includes a CPU (Central Processing Unit) 130, a memory 131 and an external interface 132, which are interconnected through an internal bus 133.

The CPU 130, by the execution of each program stored in the memory 131, can execute, for example, each function to be performed in the mail central control unit 102, the mail delivery control unit 103, the mail transmission timing control unit 105, the mail transmission route control unit 106, the mail transmission sequence control unit 107, the own node monitor control unit 108 and the other node monitor control unit 109 (for example, FIG. 11). Accordingly, the CPU 130 corresponds to, for example, the mail central control unit 102, the mail delivery control unit 103, the mail transmission timing control unit 105, the mail transmission route control unit 106, the mail transmission sequence control unit 107, the own node monitor control unit 108 and the other node monitor control unit 109, for example.

Further, the external interface 132 exchanges data etc. between with the LTE apparatus 200, the information processing apparatus 400-1, the HLR/VLR 500, the SGNs 350-1, 350-2 (which may hereafter be referred to as SGN 350) and the RNC 600, for example. The external interface 132 corresponds to, for example, the reception unit 101 and the transmission unit 110.

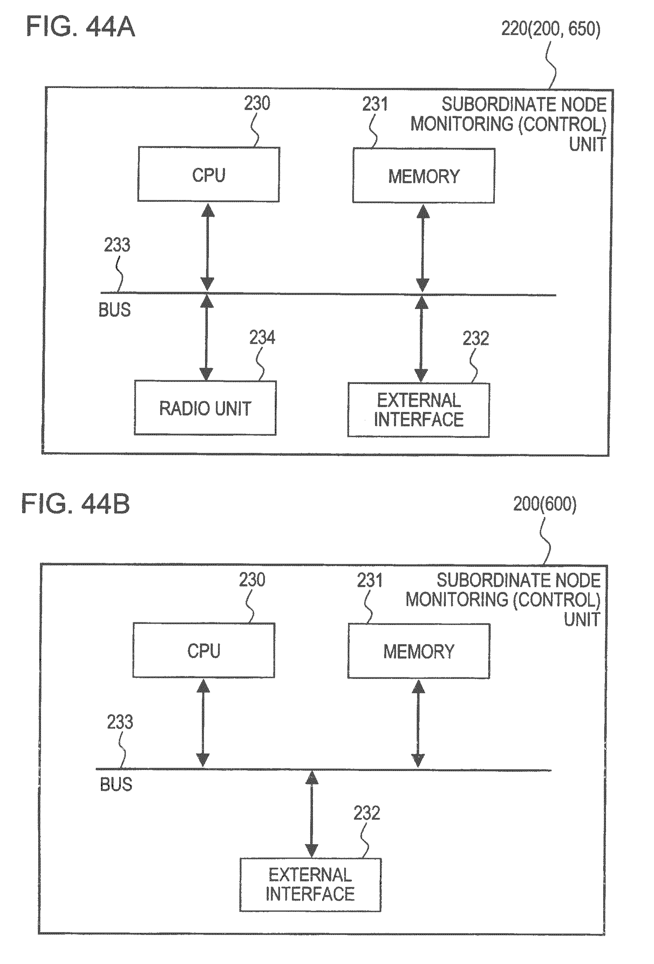

FIG. 44A is a diagram illustrating another configuration example of the subordinate node monitoring unit 220. The subordinate node monitoring unit 220 includes a CPU 230, a memory 231, an external interface 232 and a radio unit 234, which are interconnected through an internal bus 233.

The subordinate node monitoring unit 220 illustrated in FIG. 44A corresponds to, for example, the LTE apparatus 200 or the BTS 650. In the above apparatuses, in order to perform radio communication with the terminal 300, the radio unit 234 is provided in the subordinate node monitoring unit 220. The radio unit 234 converts data or a signal into a radio signal to transmit to the terminal 300, and receives a radio signal transmitted from the terminal 300, to extract data or a signal from the radio signal, for example. The radio unit 234 corresponds to the reception unit 201 and the transmission unit 210.

Further, the CPU 230 reads out and executes each program stored in the memory 231, to execute each function of the apparatus monitoring control unit 202, the apparatus monitoring unit 203, the in-apparatus congestion monitoring unit 205, the in-apparatus restriction monitoring unit 206 and the failure monitoring unit 207 (for example, FIG. 12). Accordingly, the CPU 230 corresponds to, for example, the apparatus monitoring control unit 202, the apparatus monitoring unit 203, the in-apparatus congestion monitoring unit 205, the in-apparatus restriction monitoring unit 206 and the failure monitoring unit 207.

Further, the external interface 232 exchanges data etc. with the mail server 100, the SGN 350, the information processing apparatus 400, the HLR/VLR 500 and the RNC 600. The external interface 232 corresponds to, for example, the reception unit 201 and the transmission unit 210.

FIG. 44B is a diagram illustrating another configuration example of the subordinate node monitoring unit 220. The subordinate node monitoring unit 220 illustrated in FIG. 44B corresponds to the RNC 600, for example. Accordingly, in the configuration of the subordinate node monitoring unit 220 in the present example, no radio unit 234 is provided in comparison with the subordinate node monitoring unit 220 illustrated in FIG. 44A. The external interface 232 in the present example exchanges data etc. with the mail server 100, the SGN 350, the information processing apparatus 400, the HLR/VLR 500 and the BTS 650, for example.

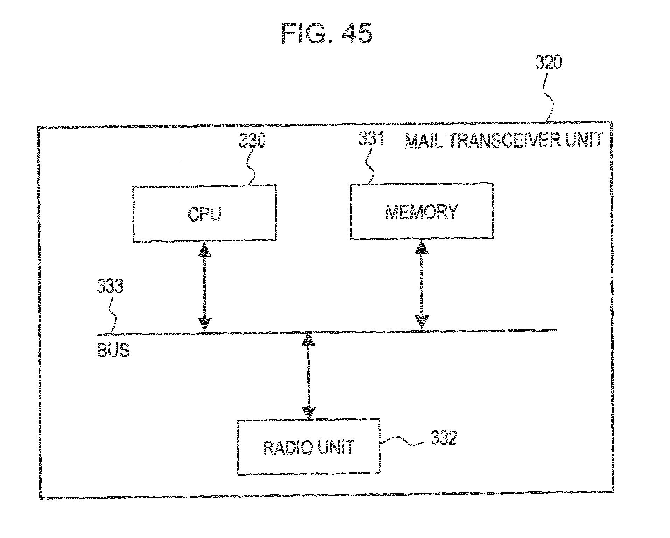

FIG. 45 is a diagram illustrating a configuration example of the mail transceiver unit 320. The mail transceiver unit 320 includes a CPU 330, a memory 331 and a radio unit 332.

The CPU 330 reads out and executes each program stored in the memory 331, to execute each function of the mobile central processing unit 302, the terminal monitoring unit 304, the mail reception mode management unit 305, the mail automatic reception control management unit 306 and the mail acquisition control management unit 307 (FIG. 13). Accordingly, the CPU 330 corresponds to, for example, the mobile central processing unit 302, the terminal monitoring unit 304, the mail reception mode management unit 305, the mail automatic reception control management unit 306 and the mail acquisition control management unit 307.

The radio unit 332 receives a radio signal transmitted from the subordinate node monitoring unit 220 to extract data etc. from the radio signal, and also converts data etc. into a radio signal to transmit to the subordinate node monitoring unit 220. The radio unit 332 corresponds to, for example, the reception unit 301 and the transmission unit 310.

There are provided a communication system and an electronic mail delivery control method in a communication system, enabling communication by preventing the occurrence of congestion and an overload in the event of a failure or a disaster.

## Claims

1. A communication system comprising:

    a terminal apparatus; and
    a delivery control apparatus configured to deliver automatically electronic mail to the terminal apparatus without waiting for an acquisition request for the electronic mail from the terminal apparatus, when the delivery control apparatus is configured to receive the electronic mail, wherein
    the delivery control apparatus includes a mail delivery management unit configured to control to suspend or resume automatic delivery of the electronic mail according to a state of a delivery route of the electronic mail or an apparatus located on the delivery route from the delivery control apparatus to the terminal apparatus, and
    the terminal apparatus includes a reception unit configured to receive the automatically delivered electronic mail.

2. The communication system according to claim 1, wherein
    the mail delivery management unit is configured to suspend automatic delivery of the electronic mail, when the mail delivery management unit is configured to detect an event of emergency information transmitted to the terminal apparatus.

3. The communication system according to claim 2, wherein
    the mail delivery management unit is configured to receive monitoring information concerning transmission of the emergency information from the apparatus located on the route, when the apparatus located on the route transmits the emergency information, and to suspend automatic delivery of the electronic mail, when the mail delivery management unit is configured to receive the monitoring information.

4. The communication system according to claim 1, wherein
    the mail delivery management unit is configured to suspend automatic delivery of the electronic mail, when the mail delivery management unit is configured to detect continuous failure occurrence on the delivery route or in the apparatus located on the delivery route.

5. The communication system according to claim 4, wherein
    the mail delivery management unit is configured to suspend automatic delivery of the electronic mail, when the mail delivery management unit is configured to receive monitoring information concerning failure occurrence from the apparatus located on the delivery route by occurring continuous failure.

6. The communication system according to claim 4, wherein
    the mail delivery management unit is configured to receive monitoring information concerning failure occurrence from the apparatus located on the delivery route, when an event continues for a predetermined time in the apparatus located on the delivery route that a system restriction rate indicative of a transmittable and receivable data amount ratio to a predetermined data amount, an utilization rate of the mail delivery management unit used in a certain period, and a traffic amount indicative of a data transmission and reception amount exceed beyond a range between an upper-limit value and a lower-limit value represented by limit values, and to suspend automatic delivery of the electronic mail, when the mail delivery management unit is configured to receive the monitoring information concerning failure occurrence.

7. The communication system according to claim 1, wherein
    the mail delivery management unit is configured to resume automatic delivery of the electronic mail, when the mail delivery management unit is configured to detect continuous restoration of a failure occurred on the delivery route or the apparatus located on the delivery route.

8. The communication system according to claim 7, wherein
the mail delivery management unit is configured to resume automatic delivery of the electronic mail, when the mail delivery management unit is configured to receive monitoring information concerning failure restoration from the apparatus located on the delivery route by occurring continuously restoration from failure.

9. The communication system according to claim 8, wherein
the mail delivery management unit is configured to receive from the apparatus located on the delivery route the monitoring information concerning failure restoration, when an event continues for a predetermined time in the apparatus located on the delivery route that a system restriction rate indicative of a transmittable and receivable data amount ratio to a predetermined data amount, an utilization rate of the mail delivery management unit used in a certain period, and a traffic amount indicative of a data transmission and reception amount range within a range between an upper-limit value and a lower-limit value represented by limit values, and to resume automatic delivery of the electronic mail, when the mail delivery management unit is configured to receive the monitoring information concerning failure restoration.

10. The communication system according to claim 2, wherein
the mail delivery management unit is configured to continue suspending automatic delivery of the electronic mail, when the mail delivery management unit is configured to detect failure on the delivery route or the apparatus on the delivery route within a certain period after suspending automatic delivery of the electronic mail, and to resume automatic delivery of electronic mail, when the mail delivery management unit is configured not to detect failure on the delivery route or the apparatus on the delivery route within the certain period after suspending automatic delivery of the electronic mail.

11. The communication system according to claim 2, wherein
the mail delivery management unit is configured to detect that the emergency information is transmitted to the terminal apparatus, when the mail delivery management unit is configured to receive monitoring information indicating transmission of the emergency information from an apparatus transmitting the emergency information.

12. The communication system according to claim 1, wherein
the mail delivery management unit is configured to transmit the electronic mail to the terminal apparatus with a transmission amount according to a load state or a congestion state of the delivery route or the apparatus located on the delivery route, when the mail delivery management unit is configured to suspend automatic delivery of the electronic mail, and to divide and transmit the electronic mail, when the electronic mail data amount exceeds the transmission amount.

13. The communication system according to claim 12, wherein
the transmission amount is a transmission amount according to overload degree representing a maximum performance value of the delivery control apparatus.

14. A delivery control method in a communication system including a terminal apparatus, and a delivery control apparatus which automatically delivers electronic mail to the terminal apparatus without waiting for an acquisition request for the electronic mail from the terminal apparatus when a delivery control apparatus receives the electronic mail, the delivery control method comprising:

    controlling to suspend or resume automatic delivery of the electronic mail according to a state of a delivery route of the electronic mail or an apparatus located on the delivery route, from the delivery control apparatus to the terminal apparatus, by the delivery control apparatus; and
    receiving the automatically delivered electronic mail, by the terminal apparatus.

15. A delivery control apparatus for automatically delivering the electronic mail to a terminal apparatus without waiting for an acquisition request for the electronic mail from the terminal apparatus, when the delivery control apparatus receives the electronic mail, the delivery control apparatus comprising:

    a mail delivery management unit configured to control to suspend or resume automatic delivery of the electronic mail according to a state of a delivery route of the electronic mail or an apparatus located on the delivery route, from the delivery control apparatus to the terminal apparatus.

16. A terminal apparatus for receiving electronic mail automatically delivered from a delivery control apparatus without transmitting an acquisition request for the electronic mail to the delivery control apparatus, the terminal apparatus comprising:

reception unit configured to receive the electronic mail from the delivery control apparatus when suspension or resume of automatic delivery of the electronic mail in the delivery control apparatus is controlled according to a state of a delivery route of the electronic mail or an apparatus on the delivery route from the delivery control apparatus to the terminal apparatus, and automatic delivery of the electronic mail is resumed.

# FIG. 1

150

DELIVERY CONTROL APPARATUS

MAIL DELIVERY
MANAGEMENT
UNIT — 151

ELECTRONIC MAIL

340

TERMINAL
APPARATUS

RECEPTION UNIT — 341

COMMUNICATION SYSTEM 1

FIG. 2

**METEOROLOGICAL AGENCY NETWORK** 70

710 CBS/ETW

**MOBILE TERMINAL BUSINESS CORPORATION NETWORK** 20

350-1 SGN
400-1 INFORMATION PROCESSING APPARATUS
200-1 LTE

500 HLR/VLR
MAIL SERVER 100
200-2 LTE
300

80 **OTHER PROVIDER NETWORK**
830 SGN
820 MAIL SERVER
810 PC

350-2 SGN
400-2 INFORMATION PROCESSING APPARATUS
200-3 LTE
200-4 LTE

MOBILE COMMUNICATION SYSTEM 10

EP 2 787 691 A1

FIG. 3

EP 2 787 691 A1

FIG. 4

MOBILE COMMUNICATION SYSTEM 10

EP 2 787 691 A1

FIG. 5

METEOROLOGICAL AGENCY NETWORK 70

710 — CBS/ETW

MOBILE TERMINAL BUSINESS CORPORATION NETWORK 20

350-1 SGN

400-1 INFORMATION PROCESSING APPARATUS

600-1 RNC

650-1 BTS

650-2 BTS

500 HLR/VLR

S6 MAIL SERVER (S7) 100

S5, S5'

600-2 RNC

OCCURRENCE OF FAILURE

650-3 BTS

S8

300

OTHER PROVIDER NETWORK 80

830 SGN

820 MAIL SERVER

810 PC

350-2 SGN

400-2 INFORMATION PROCESSING APPARATUS

600-3 RNC

650-4 BTS

600-4 RNC

650-5 BTS

MOBILE COMMUNICATION SYSTEM 10

EP 2 787 691 A1

FIG. 6

METEOROLOGICAL AGENCY NETWORK 70

710 CBS/ETW

MOBILE TERMINAL BUSINESS CORPORATION NETWORK 20

350-1 SGN

400-1 INFORMATION PROCESSING APPARATUS

200-1 LTE

S10

S12

S13

500 HLR/VLR

S14 MAIL SERVER (S15) 100

200-2 LTE

EARTHQUAKE EARLY WARNING (S11)

300

S16

80

830 SGN

820 MAIL SERVER

810 PC

OTHER PROVIDER NETWORK

350-2 SGN

400-2 INFORMATION PROCESSING APPARATUS

200-3 LTE

200-4 LTE

MOBILE COMMUNICATION SYSTEM 10

EP 2 787 691 A1

FIG. 7

MOBILE COMMUNICATION SYSTEM **10**

EP 2 787 691 A1

## FIG. 8A

120

MAIL SERVER
CONTROL UNIT

T3

T2

220

SUBORDINATE
NODE
MONITORING
(CONTROL) UNIT

T4

320

MAIL
TRANSCEIVER
UNIT

MOBILE COMMUNICATION SYSTEM 10

## FIG. 8B

120

MAIL SERVER
CONTROL UNIT

T3

T1

T2

220

SUBORDINATE
NODE
MONITORING
(CONTROL) UNIT

T4

T5

320

MAIL
TRANSCEIVER
UNIT

MOBILE COMMUNICATION SYSTEM 10

## FIG. 8C

120

MAIL SERVER
CONTROL UNIT

T3

T2

220

SUBORDINATE
NODE
MONITORING
(CONTROL) UNIT

T4

T5

320

MAIL
TRANSCEIVER
UNIT

MOBILE COMMUNICATION SYSTEM 10

## FIG. 9

MOBILE COMMUNICATION SYSTEM 10

## FIG. 10A

MOBILE COMMUNICATION SYSTEM 10

## FIG. 10B

MOBILE COMMUNICATION SYSTEM 10

# FIG. 11

FIG. 12

## FIG. 13

# FIG. 14

START — S20

IS THERE ANY CHANGE IN THE APPARATUS STATE? — S21

NO

YES

COLLECT/ACQUIRE MONITORING INFORMATION — S22

CONTROL THE MAIL DELIVERY METHOD — S23

END — S24

## FIG. 15A

| | |
|---|---|
| SYSTEM RESTRICTION RATE LIMIT VALUE | 60% |
| CPU OCCUPANCY RATE LIMIT VALUE | 80% |
| TRAFFIC AMOUNT LIMIT VALUE | 1000 k/SEC |
| DELIVERY CONTROL START   STATE CHANGE DURATION | 20 MIN |
| APPARATUS OVERLOAD DEGREE | 80 |
| | |

## FIG. 15B

| | |
|---|---|
| LTE NO. | — |
| RNC NO. | 5 |
| BTS NO. | — |
| SYSTEM RESTRICTION RATE | 40% |
| CONGESTION RATE | 70% |
| CPU OCCUPANCY RATE | 82% |
| TRAFFIC AMOUNT (DATA TRANSMISSION AMOUNT) | 1200 k/SEC |
| TERMINAL NUMBER IN COMMUNICATION | — |
| TERMINAL NUMBER WITH POWER OFF | — |

## FIG. 15C

| | |
|---|---|
| LTE NO. | 521 |
| RNC NO. | 4 |
| BTS NO. | — |
| SYSTEM RESTRICTION RATE | 40% |
| CONGESTION RATE | 70% |
| CPU OCCUPANCY RATE | 82% |
| TRAFFIC AMOUNT (DATA TRANSMISSION AMOUNT) | 1200 k/SEC |
| TERMINAL NUMBER IN COMMUNICATION | 13 |
| TERMINAL NUMBER WITH POWER OFF | 42 |

## FIG. 16A

| LTE NO. | – |
|---|---|
| RNC NO. | 5 |
| BTS NO. | – |
| SYSTEM RESTRICTION RATE | 40% |
| CONGESTION RATE | 70% |
| CPU OCCUPANCY RATE | 82% |
| TRAFFIC AMOUNT (DATA TRANSMISSION AMOUNT) | 1200 k/SEC |
| TOTAL NUMBER OF TERMINALS IN COMMUNICATION | – |
| TERMINAL NUMBER IN COMMUNICATION | – |
| TOTAL NUMBER OF TERMINALS WITH POWER OFF | – |
| TERMINAL NUMBER WITH POWER OFF | – |

## FIG. 16B

| TARGET APPARATUS TYPE FOR INFORMATION COLLECTION | RNC |
|---|---|
| APPARATUS NO. | 5 |

## FIG. 16C

| LTE NO. | – |
|---|---|
| RNC NO. | 5 |
| BTS NO. | – |
| SYSTEM RESTRICTION RATE | 40% |
| CONGESTION RATE | 70% |
| CPU OCCUPANCY RATE | 82% |
| TRAFFIC AMOUNT (DATA TRANSMISSION AMOUNT) | 1200 k/SEC |
| TOTAL NUMBER OF TERMINALS IN COMMUNICATION | – |
| TERMINAL NUMBER IN COMMUNICATION | – |
| TOTAL NUMBER OF TERMINALS WITH POWER OFF | – |
| TERMINAL NUMBER WITH POWER OFF | – |

## FIG. 17

| MAIL AUTOMATIC DELIVERY START OR STOP TYPE | START |
|---|---|
| TARGET APPARATUS TYPE FOR INFORMATION COLLECTION | RNC |
| APPARATUS NO. | 5 |
| TERMINAL NO. | 45 |

## FIG. 18A

| MAIL AUTOMATIC DELIVERY START OR STOP TYPE | START |
|---|---|
| TARGET APPARATUS TYPE FOR INFORMATION COLLECTION | RNC |
| APPARATUS NO. | 5 |
| TERMINAL NO. | 45 |

## FIG. 18B

| CONFIRMATION RESULT | OK |
|---|---|
| MAIL AUTOMATIC DELIVERY START OR STOP TYPE | START |
| TARGET APPARATUS TYPE FOR INFORMATION COLLECTION | RNC |
| APPARATUS NO. | 5 |
| TERMINAL NO. | 45 |

## FIG. 19A

| USER A = SUBORDINATE TO APPARATUS RNC5 | | | | | | | |
|---|---|---|---|---|---|---|---|
| SYSTEM RESTRICTION RATE | CONGESTION RATE | CPU OCCUPANCY RATE | LOAD RATIO (‰) | APPARATUS OVERLOAD DEGREE (SYSTEM VALUE = TRANSMISSION INCAPABILITY RATE) | DATA TRANSMISSION AMOUNT | TRANSMITTABLE | OMITTED |
| 100 | 100 | 100 | 1000 | 80 | 40 | 8 | 32 |
| 80 | 80 | 80 | 512 | 50 | 50 | 25 | 25 |
| 60 | 60 | 60 | 216 | 10 | 50 | 45 | 5 |

## FIG. 19B

| ROUTE INFORMATION | | ROUTE INFORMATION CONTENT | | | | | NODE COUNT |
|---|---|---|---|---|---|---|---|
| DESTINATION | POINT | ROUTE (1) | ROUTE (2) | ROUTE (3) | ROUTE (4) | ROUTE (5) | |
| RNC5 | RNC1 | MS1 | MS3 | END | | | 2 |
| RNC6 | RNC1 | MS2 | END | | | | 1 |

EP 2 787 691 A1

# FIG. 20

FIG. 20

**300** TERMINAL USER A
**200** LTE
**400** INFORMATION PROCESSING APPARATUS
**500** HLR/VLR
**100** MAIL SERVER

INQUIRY ABOUT IN-ZONE USER (S31)

RESPONSE ABOUT IN-ZONE USER (S32)

INCOMING NOTIFICATION (MAIL)

● START OF MAIL RECEPTION (S33)

MAIL AUTOMATIC DELIVERY

● COMPLETION OF MAIL RECEPTION

OCCURRENCE OF CONGESTION BECAUSE OF INCREASED TRAFFIC (OCCURRENCE OF APPARATUS FAILURE)

● APPARATUS STATE CHANGE (CONTINUOUS EXISTENCE OF FAILURE OCCURRENCE STATE CHANGE)

NOTIFICATION OF MONITORING INFORMATION (OCCURRENCE OF ALARM) (S34)

INQUIRY ABOUT IN-ZONE USER (S36)

RESPONSE ABOUT IN-ZONE USER (S37)

MAIL DELIVERY METHOD CHANGE CONTROL REPORT (START, SUSPENSION OF MAIL AUTOMATIC DELIVERY) (S38)

● CHANGE TO INSTRUCTED STATE

● MAIL RECEPTION DESTINED TO USER MR. A (S30) OTHER CARRIER

● CONTROL MAIL DELIVERY TO USER SUBORDINATE TO APPARATUS (S35)

(S39) OTHER CARRIER

● RETAIN MAIL

INHIBITION OF MAIL AUTOMATIC DELIVERY

NO MAIL AUTOMATIC DELIVERY

● APPARATUS STATE CHANGE (PRESENCE OF CONTINUOUS FAILURE RESTORATION STATE CHANGE)

NOTIFICATION OF MONITORING INFORMATION (ALARM RESTORATION) (S40)

MAIL DELIVERY METHOD CHANGE CONTROL REPORT (SUSPENSION, RESUMPTION OF MAIL AUTOMATIC DELIVERY) (S41)

● CHANGE TO INSTRUCTED STATE

● CONTROL DELIVERY METHOD TO USER SUBORDINATE TO APPARATUS

● HEREAFTER, START AUTOMATIC DELIVERY IF ANY MAIL FOR DELIVERY EXISTS. ALSO START AUTOMATIC DELIVERY OF RETAINED MAIL. EXECUTE DELIVERY WITH DELIVERY TIMING AND DELIVERY SIZE.

INCOMING NOTIFICATION (MAIL) (S43)

● MAIL RECEPTION DESTINED TO USER MR. A (S42) OTHER CARRIER

MAIL AUTOMATIC DELIVERY STARTED
MAIL AUTOMATIC DELIVERY SUSPENDED
MAIL AUTOMATIC DELIVERY STARTED

EP 2 787 691 A1

# FIG. 21

45

EP 2 787 691 A1

# FIG. 22

# FIG. 23

EP 2 787 691 A1

# FIG. 24

48

EP 2 787 691 A1

# FIG. 25

49

# FIG. 26

**EP 2 787 691 A1**

# FIG. 27

| 300 | 650 | 600 | 400 | 500 | 100 |
|-----|-----|-----|-----|-----|-----|
| TERMINAL USER A | BTS | RNC | INFORMATION PROCESSING APPARATUS | HLR/VLR | MAIL SERVER |

●DETECTION OF TERMINAL FAILURE

●APPARATUS STATE CHANGE
(PRESENCE OF CONTINUOUS FAILURE OCCURRENCE STATE CHANGE)
NOTIFICATION OF MONITORING INFORMATION
(OCCURRENCE OF ALARM, PRESENCE OF TERMINAL, POWER ERROR)
(S90)

INQUIRY ABOUT IN-ZONE USER
(S36)

●CONTROL MAIL DELIVERY TO USER SUBORDINATE TO APPARATUS
(S35)

RESPONSE ABOUT IN-ZONE USER
(S37)

MAIL DELIVERY METHOD CHANGE CONTROL REPORT
(START, SUSPENSION OF MAIL AUTOMATIC DELIVERY)

MAIL RECEPTION
●RETAIN MAIL
(S39)

●APPARATUS STATE CHANGE
(PRESENCE OF CONTINUOUS FAILURE RESTORATION STATE CHANGE)
NOTIFICATION OF MONITORING INFORMATION
(ALARM RESTORATION, NO PRESENCE OF TERMINAL, POWER ERROR)
(S94)

MAIL DELIVERY METHOD CHANGE CONTROL REPORT
(SUSPENSION, RESUMPTION OF MAIL AUTOMATIC DELIVERY)

MAIL RECEPTION
●MAIL RECEPTION DESTINED TO USER MR. A
(S42)

INCOMING NOTIFICATION (MAIL)
(S43)

MAIL AUTOMATIC DELIVERY STARTED

MAIL AUTOMATIC DELIVERY SUSPENDED

MAIL AUTOMATIC DELIVERY STARTED

51

FIG. 28

# FIG. 29

# FIG. 30

# FIG. 31

DISTRIBUTION OF EARLY WARNING (S50)

(S120) INQUIRY ABOUT IN-ZONE USER

RESPONSE ABOUT IN-ZONE USER (S121)

NOTIFICATION OF AN IN-ZONE USER

(S122)

DISTRIBUTION OF AREA MAIL

(S58)

DISTRIBUTION OF AREA MAIL

(S59)

● CONTINUOUS EXISTENCE OF STATE CHANGE
NOTIFICATION OF APPARATUS INFORMATION
(OCCURRENCE OF ALARM)

(S61)

CONTROL
DELIVERY METHOD
TO NOTIFIED USER

DISTRIBUTION
OF AREA MAIL

(S60)

(S123)

EP 2 787 691 A1

# FIG. 32

| 300 | 650 | 600 | 400 | 500 | 100 | 70 |
|-----|-----|-----|-----|-----|-----|-----|
| TERMINAL USER A | BTS | RNC | INFORMATION PROCESSING APPARATUS | HLR/VLR | MAIL SERVER | METEORO-LOGICAL AGENCY |

DISTRIBUTION OF EARLY WARNING (S50)

DISTRIBUTION OF AREA MAIL (S58)

●CONTINUOUS EXISTENCE OF STATE CHANGE
NOTIFICATION OF APPARATUS INFORMATION
(OCCURRENCE OF ALARM) (S61)

INQUIRY ABOUT IN-ZONE USER (S55)

RESPONSE ABOUT IN-ZONE USER (S56)

CONTROL DELIVERY METHOD TO NOTIFIED USER (S123)

DISTRIBUTION OF AREA MAIL (S59)

DISTRIBUTION OF AREA MAIL (S60)

EP 2 787 691 A1

# FIG. 33

TERMINAL USER A — 300
BTS — 650
RNC — 600
INFORMATION PROCESSING APPARATUS — 400
HLR/VLR — 500
MAIL SERVER — 100
METEORO-LOGICAL AGENCY — 70

DISTRIBUTION OF EARLY WARNING (S50)

DISTRIBUTION OF AREA MAIL (S58)

INQUIRY ABOUT IN-ZONE USER (S125)

RESPONSE ABOUT IN-ZONE USER (S126)

NOTIFICATION OF AN IN-ZONE USER (S127)

DISTRIBUTION OF AREA MAIL (S59)

●CONTINUOUS EXISTENCE OF STATE CHANGE
NOTIFICATION OF APPARATUS INFORMATION
(OCCURRENCE OF ALARM) (S61)

CONTROL DELIVERY METHOD TO NOTIFIED USER (S123)

DISTRIBUTION OF AREA MAIL (S60)

EP 2 787 691 A1

# FIG. 34

# FIG. 35

DISTRIBUTION OF EARLY WARNING (S50)

DISTRIBUTION OF AREA MAIL (S58)

DISTRIBUTION OF AREA MAIL (S59)

INQUIRY ABOUT IN-ZONE USER (S135)

NOTIFICATION OF AN IN-ZONE USER (S136)

●CONTINUOUS EXISTENCE OF STATE CHANGE
NOTIFICATION OF APPARATUS INFORMATION
(OCCURRENCE OF ALARM) (S61)

CONTROL DELIVERY METHOD TO NOTIFIED USER (S123)

DISTRIBUTION OF AREA MAIL (S60)

**300** TERMINAL USER A
**650** BTS
**600** RNC
**400** INFORMATION PROCESSING APPARATUS
**500** HLR/VLR
**100** MAIL SERVER
**70** METEORO-LOGICAL AGENCY

EP 2 787 691 A1

# FIG. 36

| 300 | 200 | 400 | 500 | 100 | 70 |
|---|---|---|---|---|---|
| TERMINAL USER A | LTE | INFORMATION PROCESSING APPARATUS | HLR/VLR | MAIL SERVER | METEORO-LOGICAL AGENCY |

DISTRIBUTION OF EARLY WARNING (S50)

DISTRIBUTION OF AREA MAIL (S51)

INQUIRY ABOUT IN-ZONE USER (S140)

NOTIFICATION OF AN IN-ZONE USER (S141)

●CONTINUOUS EXISTENCE OF STATE CHANGE

NOTIFICATION OF APPARATUS INFORMATION (OCCURRENCE OF ALARM) (S61)

CONTROL DELIVERY METHOD TO NOTIFIED USER (S123)

DISTRIBUTION OF AREA MAIL (S52)

EP 2 787 691 A1

FIG. 37

EP 2 787 691 A1

# FIG. 38

DISTRIBUTION OF EARLY WARNING (S50)

DISTRIBUTION OF AREA MAIL (S58)

NOTIFICATION OF APPARATUS INFORMATION (RNC NO.) AND CONGESTION AND RESTRICTION INFORMATION (S155)

INQUIRY ABOUT IN-ZONE USER (S156)

RESPONSE ABOUT IN-ZONE USER (S157)

CONTROL DELIVERY METHOD TO NOTIFIED USER (S150)

DISTRIBUTION OF AREA MAIL (S59)

DISTRIBUTION OF AREA MAIL (S60)

(S152)

(S151)

Boxes: 300 TERMINAL USER A | 650 BTS | 600 RNC | 400 INFORMATION PROCESSING APPARATUS | 500 HLR/VLR | 100 MAIL SERVER | 70 METEORO-LOGICAL AGENCY

EP 2 787 691 A1

FIG. 39

FIG. 40

| TERMINAL USER A 300 | BTS 650 | RNC 600 | INFORMATION PROCESSING APPARATUS 400 | HLR/VLR 500 | MAIL SERVER 100 | METEORO- LOGICAL AGENCY 70 |

S180

START OF RESTRICTION (S181)

NOTIFICATION OF APPARATUS INFORMATION AND RESTRICTION INFORMATION

(S182)

CONTROL DELIVERY SIZE (S183)

NOTIFICATION OF RESTRICTION INFORMATION (CANCELLATION)

(S185)

(S184)

CONTROL DELIVERY SIZE

S186

HEREAFTER SET MAIL DELIVERY METHOD TO NORMALITY

EP 2 787 691 A1

# FIG. 41

Sequence diagram between: TERMINAL USER A (300), BTS (650), RNC (600), INFORMATION PROCESSING APPARATUS (400), HLR/VLR (500), MAIL SERVER (100), METEOROLOGICAL AGENCY (70).

- DISTRIBUTION OF EARLY WARNING (S50)
- DISTRIBUTION OF AREA MAIL (S58)
- DISTRIBUTION OF AREA MAIL (S59)
- NOTIFICATION OF APPARATUS INFORMATION AND RESTRICTION INFORMATION (S190)
- DISTRIBUTION OF AREA MAIL (S60)
- CONTROL DELIVERY METHOD TO NOTIFIED USER (S191)

EP 2 787 691 A1

# FIG. 42

DISTRIBUTION OF EARLY WARNING (S50)

DISTRIBUTION OF AREA MAIL (S51)

NOTIFICATION OF APPARATUS INFORMATION AND RESTRICTION INFORMATION (S195)

DISTRIBUTION OF AREA MAIL (S52)

CONTROL DELIVERY METHOD TO NOTIFIED USER (S196)

300 TERMINAL USER A
200 LTE
400 INFORMATION PROCESSING APPARATUS
500 HLR/VLR
100 MAIL SERVER
70 METEORO-LOGICAL AGENCY

EP 2 787 691 A1

# FIG. 43

120

MAIL SERVER
CONTROL UNIT

130

CPU

131

MEMORY

133

BUS

132

EXTERNAL
INTERFACE

## FIG. 44A

220(200, 650)

SUBORDINATE NODE
MONITORING (CONTROL)
UNIT

230
CPU

231
MEMORY

233
BUS

234
RADIO UNIT

232
EXTERNAL
INTERFACE

## FIG. 44B

200(600)

SUBORDINATE NODE
MONITORING (CONTROL)
UNIT

230
CPU

231
MEMORY

233
BUS

232
EXTERNAL
INTERFACE

FIG. 45

320

MAIL TRANSCEIVER UNIT

330

CPU

331

MEMORY

333

BUS

RADIO UNIT

332

**EUROPEAN SEARCH REPORT**

Application Number

EP 14 16 2306

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2006/233187 A1 (KARMAKAR SRIMANTEE [CA] ET AL) 19 October 2006 (2006-10-19) | 1,14-16 | INV. H04L12/58 |
| Y | * page 1, paragraph 2 - page 4, paragraph 67 * | 2-13 | |
| X | US 6 138 146 A (MOON BILLY G [US] ET AL) 24 October 2000 (2000-10-24) | 1,14-16 | |
| Y | * column 2, line 15 - column 7, line 63 * | 2-13 | |
| X | US 2010/054193 A1 (GALE MARTIN J [GB] ET AL) 4 March 2010 (2010-03-04) | 1,14-16 | |
| Y | * page 1, paragraph 1 - page 4, paragraph 34 * | 2-13 | |
| Y | WO 2011/000520 A1 (NEC EUROPE LTD [DE]; KOLBE HANS-JOERG [DE]; DIETZ THOMAS [DE]; BRUNNER) 6 January 2011 (2011-01-06) * page 1, line 3 - page 13, line 25 * | 2-13 | |

TECHNICAL FIELDS SEARCHED (IPC)

H04L

The present search report has been drawn up for all claims

| Place of search | Date of completion of the search | Examiner |
|---|---|---|
| Munich | 21 July 2014 | Oteo Mayayo, Carlota |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

EP 2 787 691 A1

**ANNEX TO THE EUROPEAN SEARCH REPORT
ON EUROPEAN PATENT APPLICATION NO.** EP 14 16 2306

This annex lists the patent family members relating to the patent documents cited in the above-mentioned European search report.
The members are as contained in the European Patent Office EDP file on
The European Patent Office is in no way liable for these particulars which are merely given for the purpose of information.

21-07-2014

| Patent document cited in search report | | Publication date | Patent family member(s) | | Publication date |
|---|---|---|---|---|---|
| US 2006233187 | A1 | 19-10-2006 | AT | 434325 T | 15-07-2009 |
| | | | CA | 2562182 A1 | 18-10-2006 |
| | | | CN | 1957577 A | 02-05-2007 |
| | | | EP | 1751944 A1 | 14-02-2007 |
| | | | US | 2006233187 A1 | 19-10-2006 |
| | | | US | 2012173652 A1 | 05-07-2012 |
| | | | WO | 2006111016 A1 | 26-10-2006 |
| US 6138146 | A | 24-10-2000 | AU | 740890 B2 | 15-11-2001 |
| | | | AU | 9311298 A | 23-04-1999 |
| | | | BR | 9812557 A | 25-07-2000 |
| | | | CA | 2305358 A1 | 08-04-1999 |
| | | | CN | 1272278 A | 01-11-2000 |
| | | | DE | 69824306 D1 | 08-07-2004 |
| | | | DE | 69824306 T2 | 23-06-2005 |
| | | | EE | 200000197 A | 16-04-2001 |
| | | | EP | 1021896 A1 | 26-07-2000 |
| | | | HK | 1032496 A1 | 04-11-2005 |
| | | | ID | 24746 A | 03-08-2000 |
| | | | IL | 135280 A | 12-05-2004 |
| | | | JP | 2001518748 A | 16-10-2001 |
| | | | NO | 20001603 A | 29-05-2000 |
| | | | US | 6138146 A | 24-10-2000 |
| | | | WO | 9917505 A1 | 08-04-1999 |
| US 2010054193 | A1 | 04-03-2010 | NONE | | |
| WO 2011000520 | A1 | 06-01-2011 | EP | 2449756 A1 | 09-05-2012 |
| | | | JP | 2012530986 A | 06-12-2012 |
| | | | US | 2012163380 A1 | 28-06-2012 |
| | | | WO | 2011000520 A1 | 06-01-2011 |

EPO FORM P0459

For more details about this annex : see Official Journal of the European Patent Office, No. 12/82

71

**EP 2 787 691 A1**

## REFERENCES CITED IN THE DESCRIPTION

**Patent documents cited in the description**

- JP 2009239533 A

- JP 2006065454 A